# EUROPÄISCHE PATENTSCHRIFT

(11) **EP 3 226 727 B1**
(45) Veröffentlichungstag und Bekanntmachung des Hinweises auf die Patenterteilung: **13.02.2019**
(21) Anmeldenummer: 15802142.8
(22) Anmeldetag: 01.12.2015
(51) Int. Cl.: A47J 31/36, A47J 31/44

(54) **PORTIONSKAPSELMASCHINE UND VERFAHREN ZUM BETRIEB EINER PORTIONSKAPSELMASCHINE**
SINGLE-SERVE-CAPSULE MACHINE AND METHOD FOR OPERATING A SINGLE-SERVE-CAPSULE MACHINE
MACHINE À CAPSULE-PORTION ET PROCÉDÉ POUR FAIRE FONCTIONNER UNE MACHINE À CAPSULE-PORTION

(30) Priorität: 01.12.2014 DE 102014117619
(43) Veröffentlichungstag der Anmeldung: 11.10.2017
(73) Patentinhaber: Eugster/Frismag AG, 8580 Amriswil (CH)
(72) Erfinder: KRÜGER, Marc, 51467 Bergisch Gladbach (DE); EMPL, Günter, 51429 Bergisch Gladbach (DE)
(74) Vertreter: Loock, Jan Pieter
(86) Internationale Anmeldenummer: PCT/EP2015/078261
(87) Internationale Veröffentlichungsnummer: WO 2016/087474

(56) Entgegenhaltungen:
- WO-A1-2012/123440
- WO-A2-2009/113035
- CH-A1- 707 374
- DE-U1- 20 105 672

## Beschreibung

### Stand der Technik

Die vorliegende Erfindung geht aus von einer Portionskapselmaschine zur Herstellung eines Getränks aus einer Portionskapsel. Solche Portionskapselmaschinen sind aus dem Stand der Technik allgemein bekannt.

Beispielsweise offenbart die Druckschrift DE 10 2011 011 204 A1 eine Portionskapselmaschine zum Herstellen von Getränken aus vorportionierten Portionskapseln mit einer Brühkammer zum Extrahieren und/oder Lösen einer in der Portionskapsel vorgesehenen Getränkerohsubstanz, wobei die Brühkammer einen Kapselzuführschacht, durch welchen der Portionskapselmaschine eine Portionskapsel zuführbar ist, ein bewegliches Brühkammerelement und ein unbewegliches Brühkammerelement aufweist und das bewegliche Brühkammerelement zwischen einer Ladestellung, in welcher die beiden Brühkammerelemente voneinander beabstandet sind, und einer Arbeitsstellung, in welcher die beiden Brühkammerelemente zur Bildung einer im Wesentlichen geschlossenen Brühkammer einander angenähert sind, bewegbar ist. Jedes Brühkammerelement weist jeweils ein Perforationsmittel auf, wobei eines der beiden Perforationsmittel zum Perforieren des Kapseldeckels und das andere der beiden Perforationsmittel zum Perforieren des Bodenbereichs der Portionskapsel vorgesehen sind, wenn das bewegliche Brühkammerelement von der Ladestellung in die Arbeitsstellung überführt wird. Nachdem die Brühkammer geschlossen und die Portionskapsel beidseitig perforiert ist, wird der Brühkammer mittels einer Pumpe und einem Thermoelement heißes Wasser unter Druck zugeführt. Innerhalb der Portionskapsel wechselwirkt die Flüssigkeit mit der Getränkerohsubstanz, wodurch sich das Getränk bildet. Das Getränk verlässt die Portionskapsel durch das Perforationsloch im Bodenbereich und wird sodann in ein Auffanggefäß, beispielsweise eine Tasse, geleitet.

Bei der vorstehend beschriebenen Portionskapselmaschine ist ein Handhebel manuell von einem Benutzer zu betätigen, um das bewegliche Brühkammerelement von der Ladestellung in die Arbeitsstellung zu überführen und den Brühvorgang zur Herstellung des Getränks einzuleiten. Zur Erhöhung des Komforts bei der Herstellung der Getränke ist es wünschenswert, die Bewegung des beweglichen Brühkammerelements mit einem Motor automatisch und nicht mehr durch Muskelkraft des Benutzers herbeizuführen. Bei der Umsetzung muss allerdings die Betriebssicherheit und Langlebigkeit der Portionskapselmaschine sichergestellt werden. Insbesondere besteht nämlich die Gefahr, dass beim Bewegen des beweglichen Brühkammerelements von der Ladestellung in die Arbeitsstellung eine Portionskapsel, welche ihre Endposition in der Ladestellung noch nicht vollständig eingenommen hat, zwischen dem beweglichen Brühkammerelement und der Wandung des Kapselzuführschachts eingeklemmt wird. Die Bewegung des motorischen betriebenen Brühkammerelements würde in diesem Fall zu einer Beschädigung der Portionskapselmaschine und zu einer Gefährdung des Benutzers führen.

Gattungsgemäße Portionskapselmaschinen sind ferner aus WO 2012 / 123 440 A1, CH 707 374 A1, WO 2009 / 113 035 A2 und DE 201 05 672 U1 bekannt.

### Offenbarung der Erfindung

Es ist eine Aufgabe der vorliegenden Erfindung, eine motorisch betriebene Portionskapselmaschine zur Verfügung zu stellen, welche eine hohe Betriebssicherheit aufweist, und bei welcher Fehlfunktionen, insbesondere durch ein Einklemmen der Portionskapsel, zu jedem Zeitpunkt mit größtmöglicher Sicherheit vermieden werden.

Die Aufgabe der vorliegenden Erfindung wird gelöst mit einer Portionskapselmaschine zur Herstellung eines Getränks aus einer Portionskapsel, wobei die Portionskapselmaschine ein bewegliches Brühkammerelement und ein unbewegliches Brühkammerelement aufweist, wobei das bewegliche Brühkammerelement mittels eines Motors zwischen einer Ladestellung, in welcher das bewegliche Brühkammerelement und das unbewegliche Brühkammerelement zum Einbringen einer Portionskapsel voneinander beabstandet sind, und einer Arbeitsstellung, in welcher das bewegliche Brühkammerelement und das unbewegliche Brühkammerelement zur Bildung einer im Wesentlichen geschlossenen Brühkammer einander angenähert sind, bewegbar ist, wobei die Portionskapselmaschine ferner einen Kapselzuführschacht, durch welchen Portionskapseln dem in der Ladestellung befindlichen beweglichen Brühkammerelement zuführbar sind, aufweist, wobei innerhalb des Kapselzuführschachts eine Blockiervorrichtung angeordnet ist, welche zwischen einer Blockierstellung, in welcher Portionskapseln am Passieren der Blockiervorrichtung gehindert werden, und einer Freigabestellung, in welcher die Blockiervorrichtung für Portionskapseln passierbar ist, mittels eines Antriebs überführbar ist, wobei im Kapselzuführschacht ferner ein Kapseldetektor angeordnet ist, welcher ein Passieren einer Portionskapsel detektiert, und wobei die Portionskapselmaschine eine Betätigungsvorrichtung zum manuellen Starten des Getränkeherstellungsverfahrens durch einen Benutzer aufweist, wobei die Portionskapselmaschine derart konfiguriert ist, dass in Abhängigkeit eines durch Betätigen der Betätigungsvorrichtung ausgelösten Startsignals die Blockiervorrichtung von der Blockierstellung in die Freigabestellung verfahren wird, wobei die Portionskapselmaschine ferner derart konfiguriert ist, dass nach Verstreichen einer ersten Zeitspanne seit Auslösen des Startsignals das bewegliche Brühkammerelement von der Ladestellung in die Arbeitsstellung überführt wird und wobei die Portionskapselmaschine derart konfiguriert ist, dass eine Flüssigkeitszuführvorrichtung zum Zuführen von Flüssigkeit in die Brühkammer in Betrieb genommen wird, wenn das bewegliche Brühkammerelement in der Arbeitsstellung befindlich ist und der Kapseldetektor zuvor die Passage einer Portionskapsel detektiert hat.

Die erfindungsgemäße Portionskapselmaschine hat gegenüber dem Stand der Technik den Vorteil, dass einerseits das bewegliche Brühkammerelement mittels des Motors automatisch verfahren wird, wodurch sich der Bedienungskomfort für den Benutzer erheblich erhöht, und andererseits durch die Blockiervorrichtung und die durch die erste Zeitspanne verursachte Verzögerung beim Verfahren des beweglichen Brühkammerelements die Gefahr eines Einklemmens der Portionskapsel zwischen Elementen des beweglichen Brühkammerelements und Teilen des Kapselzuführschachts ausgeräumt wird. Zudem ist die Portionskapselmaschine vergleichsweise einfach und kostengünstig realisierbar. Vorteilhafterweise wird das bewegliche Brühkammerelement stets nach Abwarten der ersten Zeitspanne seit dem Startsignal von der Ladestellung in die Arbeitsstellung verfahren, so dass der Motor nicht in Abhängigkeit eines Sensorsignals gesteuert werden muss. Hierdurch wird die Betriebssicherheit wesentlich erhöht, da Sensorsignale stets fehlerbehaftet sein können. Das bewegliche Brühkammerelement wird demnach von der Ladestellung in die Arbeitsstellung verfahren, auch wenn keine Portionskapsel im Kapselzuführschacht vorhanden war. In Abhängigkeit des Sensorsignals des Kapseldetektors wird vorteilhafterweise hingegen die Flüssigkeitszuführvorrichtung betrieben, so dass nicht unnötig, d.h. wenn keine Portionskapsel zugegen ist, Flüssigkeit in die Brühkammer eingeleitet wird. Ein fehlerhaftes Sensorsignal würde bei der Flüssigkeitszuführvorrichtung allerdings nicht zu einer folgenschweren Fehlfunktion führen, durch welche die gesamte Portionskapselmaschine irreversibel beschädigt oder gar der Benutzer der Portionskapselmaschine verletzt werden könnte. Die Flüssigkeitszuführvorrichtung umfasst insbesondere eine Pumpe zum Fördern der Flüssigkeit unter Druck in Richtung der Brühkammer und ein Thermoelement zum Heizen der Flüssigkeit. Denkbar ist, dass die Flüssigkeitszuführvorrichtung ferner einen Durchflussmesser umfasst, welcher die Menge der zur Brühkammer geförderten Flüssigkeit misst.

Vorteilhafte Ausgestaltungen und Weiterbildungen der Erfindung sind den Unteransprüchen, sowie der Beschreibung unter Bezugnahme auf die Zeichnungen entnehmbar.

Gemäß einer bevorzugten Ausführungsform der vorliegenden Erfindung ist vorgesehen, dass das bewegliche Brühkammerelement einen Kapselerkennungsdetektor aufweist, welcher zum Auslesen einer auf der Portionskapsel befindlichen Kennung vorgesehen ist. Vorzugsweise weist die Portionskapselmaschine ferner eine Auswerteeinheit zum Vergleichen der detektierten Kennung mit vorgespeicherten Kennungen auf, wobei die Flüssigkeitszufuhrvorrichtung von der Auswerteeinheit derart gesteuert wird, dass die Flüssigkeitszufuhr, insbesondere die Temperatur, der Druck, die Strömungscharakteristik und/oder die Wassermenge der zugeführten Flüssigkeit, bei Detektion einer bekannten Kennung an ein vordefiniertes Brühprogramm angepasst wird. In vorteilhafter Weise kann die in der Brühkammer befindliche Portionskapsel mittels des Kapselerkennungsdetektors erkannt werden, so dass mittels der Auswerteeinheit zu dem in dieser speziellen Portionskapsel enthaltenen Getränkerohsubstanz das passende Brühprogramm ausgesucht und initialisiert werden kann. Denkbar ist, dass die Erkennungsprozedur nur dann gestartet bzw. durchgeführt wird, wenn der Kapseldetektor zuvor die Passage einer Portionskapsel detektiert hat. Eine Anpassung der Strömungscharakteristik kann insbesondere ein Intervallbrühen mit optionalen Pausen umfassen. Denkbar ist, dass in einem ersten Intervall Flüssigkeit zugeführt wird, anschließend in einem zweiten Intervall die Flüssigkeitszufuhr pausiert (damit beispielsweise Tee in der Kapsel ziehen kann) und abschließend in einem dritten Intervall erneut Flüssigkeit zugeführt wird. Die Strömungsgeschwindigkeit und die Menge der zugeführten Flüssigkeit kann zwischen dem ersten und dem dritten Intervall voneinander abweichen.

Gemäß einer weiteren bevorzugten Ausführungsform der vorliegenden Erfindung ist vorgesehen, dass die Portionskapselmaschine derart konfiguriert ist, dass die Flüssigkeitszuführvorrichtung in einem Sicherheitsbetrieb betrieben wird, in welchem der Brühkammer Flüssigkeit mit reduzierter Temperatur, reduziertem Druck, geänderter Strömungscharakteristik und/oder reduzierter Wassermenge zugeführt wird, wenn das bewegliche Brühkammerelement in der Arbeitsstellung befindlich ist, wenn der Kapseldetektor zuvor die Passage einer Portionskapsel detektiert hat und wenn die Kapselerkennung noch nicht abgeschlossen ist oder keine bekannte Kennung detektiert wurde. Wenn eine systemfremde oder unbekannte Kapsel mit dem normalen Brühdruck (bis zu 19 bar) der erfindungsgemäßen Brühvorrichtung extrahiert wird, besteht die Gefahr, dass diese Kapsel aufplatzt, wenn die Kapsel für einen solch hohen Brühdruck nicht ausgelegt ist, beispielsweise weil die zugehörige Maschine mit einem niedrigeren Brühdruck arbeitet. Das Aufplatzen der Kapsel kann dazu führen, dass heiße Flüssigkeit aus der Portionskapselmaschine spritzt und einen Benutzer verletzt. Zur Vermeidung einer solchen Fehlfunktion wird die Brühprozedur in der geschlossenen Brühkammer zunächst im Sicherheitsbetrieb gestartet. Anschließend wird versucht, die Kapsel zu erkennen. Falls die Kapsel nicht erkannt wird, verbleibt die Portionskapselmaschine im Sicherheitsbetrieb. Nur wenn die Kapsel identifiziert wird, wird in das passende Brühprogramm gewechselt und der Druck, die Temperatur Strömungscharakteristik und/oder die Wassermenge erhöht und/oder die Strömungscharakteristik in gewünschter Weise angepasst.

Gemäß einer weiteren bevorzugten Ausführungsform der vorliegenden Erfindung ist vorgesehen, dass die Portionskapselmaschine ferner derart konfiguriert ist, dass entweder nach Verstreichen einer zweiten Zeitspanne seit Auslösen des Startsignals oder nach Ablauf des vordefinierten Brühprogramms das bewegliche Brühkammerelement von der Arbeitsstellung zurück in die Ladestellung überführt wird. Auf diese Weise wird erreicht, dass das bewegliche Brühkammerelement automatisch wieder zurück in die Ladestellung fährt, wenn keine Portionskapsel in der Brühkammer zugegen ist. Denkbar wäre auch, dass das unbewegliche Brühkammerelement von der Arbeitsstellung zurück in die Ladestellung fährt, wenn der Kapseldetektor zuvor die Passage einer Portionskapsel nicht detektieren konnte oder wenn die Flüssigkeitszuführvorrichtung der Brühkammer keine Flüssigkeit zuführt oder wenn der Sicherheitsbetrieb abgeschlossen wurde oder wenn das Brühprogramm abgeschlossen wurde.

Gemäß einer weiteren bevorzugten Ausführungsform der vorliegenden Erfindung ist vorgesehen, dass die Portionskapselmaschine einen weiteren Kapseldetektor aufweist, welcher unterhalb der Brühkammer angeordnet ist und mit einem Kapselzähler verknüpft ist. Auf diese Weise wird erzielt, dass die Gesamtmenge der Portionskapseln, welche in der Portionskapselmaschine verwendet wurden, überwacht und aufgezeichnet wird. Hierdurch können beispielsweise Serviceintervalle der Maschine eingehalten werden.

Gemäß einer weiteren bevorzugten Ausführungsform der vorliegenden Erfindung ist vorgesehen, dass der Kapseldetektor und/oder der weitere Kapseldetektor eine Lichtschranke umfassen.

Gemäß einer weiteren bevorzugten Ausführungsform der vorliegenden Erfindung ist vorgesehen, dass die Blockiervorrichtung einen beweglichen Pin umfasst, welcher mittels eines Antriebs automatisch in den Kapselzuführschacht hinein und aus dem Kapselzuführschacht heraus linear verfahrbar oder schwenkbar ist. Der Kapselzuführschacht wird durch den Pin gesperrt, wenn die Blockiervorrichtung in der Blockierstellung ist, so dass keine Portionskapsel durch den Kapselzuführschacht in Richtung des beweglichen Brühkammerelements gelangen kann. Auf diese Weise wird verhindert, dass eine Kapsel eingeworfen wird und nur teilweise in Kontakt mit dem beweglichen Brühkammerelement gelangt, während das bewegliche Brühkammerelement gerade von der Ladestellung in Richtung der Arbeitsstellung verfahren wird.

Ein weiterer Gegenstand der vorliegenden Erfindung ist ein Verfahren zum Betrieb der erfindungsgemäßen Portionskapselmaschine, wobei in einem ersten Verfahrensschritt die Blockiervorrichtung von der Blockierstellung in die Freigabestellung überführt wird, wenn ein Startsignal von der Betätigungsvorrichtung ausgelöst wird, wobei in einem zweiten Verfahrensschritt nach Verstreichen einer ersten Zeitspanne seit Auslösen des Startsignals das bewegliche Brühkammerelement von der Ladestellung in die Arbeitsstellung verfahren wird, wobei in einem dritten Verfahrensschritt der Brühkammer Flüssigkeit mittels der Flüs-sigkeitszuführvorrichtung zugeführt wird, wenn das bewegliche Brühkammerelement in der Arbeitsstellung befindlich ist und der Kapseldetektor zuvor die Passage einer Portionskapsel detektiert hat.

Analog zur erfindungsgemäßen Portionskapselmaschine hat auch das erfindungsgemäße Verfahren gegenüber dem Stand der Technik den Vorteil, dass einerseits das bewegliche Brühkammerelement mittels des Motors automatisch verfahren wird, wodurch sich der Bedienungskomfort für den Benutzer erheblich erhöht, und andererseits durch die Blockiervorrichtung und die durch die erste Zeitspanne verursachte Verzögerung beim Verfahren des beweglichen Brühkammerelements die Gefahr eines Einklemmens der Portionskapsel zwischen Elementen des beweglichen Brühkammerelements und Teilen des Kapselzuführschachts ausgeräumt wird. Zudem ist das Verfahren vergleichsweise einfach und kostengünstig realisierbar. Vorteilhafterweise wird das bewegliche Brühkammerelement stets nach Abwarten der ersten Zeitspanne seit dem Startsignal von der Ladestellung in die Arbeitsstellung verfahren, so dass der Motor nicht in Abhängigkeit eines Sensorsignals gesteuert werden muss. Hierdurch wird die Betriebssicherheit wesentlich erhöht, da Sensorsignale stets fehlerbehaftet sein können. Das bewegliche Brühkammerelement wird demnach von der Ladestellung in die Arbeitsstellung verfahren, auch wenn keine Portionskapsel im Kapselzuführschacht vorhanden war. In Abhängigkeit des Sensorsignals des Kapseldetektors wird vorteilhafterweise hingegen die Flüssigkeitszuführvorrichtung betrieben, so dass nicht unnötig, d.h. wenn keine Portionskapsel zugegen ist, Flüssigkeit in die Brühkammer eingeleitet wird. Ein fehlerhaftes Sensorsignal würde bei der Flüssigkeitszuführvorrichtung allerdings nicht zu einer folgenschweren Fehlfunktion führen, durch welche die gesamte Portionskapselmaschine irreversibel beschädigt oder gar der Benutzer der Portionskapselmaschine verletzt werden könnte.

Gemäß einer bevorzugten Ausführungsform der vorliegenden Erfindung ist vorgesehen, dass im dritten Verfahrensschritt die Flüssigkeitszuführvorrichtung nach dem Schließen der Brühkammer zunächst in einem Sicherheitsbetrieb betrieben wird, in welchem der Brühkammer Flüssigkeit mit reduzierter Temperatur, reduziertem Druck und/oder reduzierter Wassermenge zugeführt wird. Vorteilhafterweise wird durch den Sicherheitsbetrieb eine Gefährdung der Portionskapselmaschine und ihrer Benutzer, beispielsweise durch ein Aufplatzen von systemfremden Portionskapseln vermieden.

Gemäß einer weiteren bevorzugten Ausführungsform der vorliegenden Erfindung ist vorgesehen, dass während des dritten Verfahrensschrittes eine auf der Portionskapsel befindliche Kennung mittels eines Kapselerkennungsdetektors ausgelesen und mittels einer Auswerteeinheit mit vorgespeicherten Kennungen verglichen wird. Vorzugsweise wird die Kennung während des Sicherheitsbetriebs ermittelt, so dass der Portionskapseldeckel, auf welchem vorzugsweise die Kennung enthalten ist, durch die Flüssigkeit im Inneren der Portionskapsel gegen die Oberfläche des Kapselerkennungsdetektors gedrückt wird und somit ein fehlerfreies Auslesen ermöglicht wird.

Gemäß einer weiteren bevorzugten Ausführungsform der vorliegenden Erfindung ist vorgesehen, dass im dritten Verfahrensschritt die Flüssigkeitszuführvorrichtung vom Sicherheitsbetrieb in ein zur Portionskapsel passendes vordefiniertes Brühprogramm wechselt nur wenn die ausgelesene Kennung von der Auswerteeinheit erkannt und einem bestimmten Brühprogramm zugeordnet wird, wobei im Rahmen des vordefinierten Brühprogramms die Flüssigkeitszufuhr, insbesondere die Temperatur, der Druck und/oder die Wassermenge der zugeführten Flüssigkeit angepasst wird und/oder die Strömungscharakteristik in gewünschter Weise angepasst wird. Vorteilhafterweise wird die Brühprozedur somit an die individuellen Erfordernisse der in der Brühkammer befindlichen Portionskapsel angepasst. Auf diese Weise können unterschiedliche Getränke, wie beispielsweise Kaffee, Cappuccino, Espresso, Tee, Kakao und dergleichen, durch die Verwendung unterschiedlicher Portionskapseln mit nur einer einzigen Portionskapselmaschine hergestellt werden.

Gemäß einer weiteren bevorzugten Ausführungsform der vorliegenden Erfindung ist vorgesehen, dass der Sicherheitsbetrieb abgebrochen wird und das bewegliche Brühkammerelement zurück in die Ladestellung verfahren wird, sobald die Betätigungsvorrichtung während des Sicherheitsbetriebs durch den Benutzer ausgelöst wird. Vorteilhafterweise reagiert die Portionskapsel somit unmittelbar auf die Eingabe des Benutzers, welcher möglicherweise das Einwerfen einer systemfremden Kapsel bemerkt hat und sodann den Getränkeherstellungsprozess mit einer passenden Kapsel neu starten möchte.

Gemäß einer weiteren bevorzugten Ausführungsform der vorliegenden Erfindung ist vorgesehen, dass in einem vierten Verfahrensschritt das bewegliche Brühkammerelement von der Arbeitsstellung zurück in die Ladestellung verfahren wird, sobald eine zweite Zeitspanne seit Auslösen des Startsignals verstrichen ist oder das vordefinierte Brühprogramm endet. Auf diese Weise wird erreicht, dass das bewegliche Brühkammerelement automatisch wieder zurück in die Ladestellung fährt, wenn keine Portionskapsel in der Brühkammer zugegen ist. Denkbar wäre auch, dass das unbewegliche Brühkammerelement von der Arbeitsstellung zurück in die Ladestellung fährt, wenn der Kapseldetektor zuvor die Passage einer Portionskapsel nicht detektieren konnte oder wenn die Flüssigkeitszuführvorrichtung der Brühkammer keine Flüssigkeit zuführt oder wenn der Sicherheitsbetrieb abgeschlossen wurde oder wenn das Brühprogramm abgeschlossen wurde.

Gemäß einer weiteren bevorzugten Ausführungsform der vorliegenden Erfindung ist vorgesehen, dass die Anzahl der in der Portionskapselmaschine verwendeten Portionskapseln von einem unterhalb der Brühkammer angeordneten weiteren Kapseldetektor gezählt werden. Auf diese Weise wird erzielt, dass die Gesamtmenge der Portionskapseln, welche in der Portionskapselmaschine verwendet wurde, überwacht und aufgezeichnet wird. Hierdurch können beispielsweise Serviceintervalle der Maschine eingehalten werden.

Gemäß einer weiteren bevorzugten Ausführungsform der vorliegenden Erfindung ist vorgesehen, dass im ersten Verfahrensschritt die Blockiervorrichtung nach Verstreichen einer dritten Zeitspanne von der Freigabestellung zurück in die Blockierstellung überführt wird. Denkbar ist, dass die dritte Zeitspanne kürzer als die erste Zeitspanne ist und insbesondere derart kurz ausgewählt ist, dass während der dritten Zeitspanne nur genau eine Portionskapsel die Blockiervorrichtung passieren kann. Die erste Zeitspanne ist so gewählt, dass ausreichend Zeit vorhanden ist, damit diese passierende Portionskapsel in der Ladeposition auf dem unbeweglichen Brühkammerelement zur Ruhe kommt. Nach dem Betätigen der Betätigungsvorrichtung ist somit immer ein reibungsfreies Schließen der Brühkammer durch den Motor sichergestellt.

Gemäß einer alternativen Ausführungsform der vorliegenden Erfindung ist vorgesehen, dass im dritten Verfahrensschritt, insbesondere nach dem Schließen der Brühkammer, zunächst eine auf der Portionskapsel befindliche Kennung mittels eines Kapselerkennungsdetektors ausgelesen und mittels einer Auswerteeinheit mit vorgespeicherten Kennungen verglichen wird und wobei anschließend der Brühkammer Flüssigkeit mittels der Flüssigkeitszuführvorrichtung gemäß einem vordefinierten Brühprogramm zugeführt wird, wenn die ausgelesene Kennung von der Auswerteeinheit erkannt und einem vordefinierten Brühprogramm zuordenbar ist, wobei im Rahmen des vordefinierten Brühprogramms die Flüssigkeitszufuhr, insbesondere die Temperatur, der Druck und/oder die Wassermenge der zugeführten Flüssigkeit angepasst wird. In dieser alternativen Ausführungsform wird nach dem Schließen der Brühkammer nicht zunächst der Sicherheitsbetrieb gestartet, sondern zuerst die Kapselerkennung durchgeführt. Anschließend wird in Abhängigkeit der erkannten Kennung die Flüssigkeitszufuhr sofort gemäß des anhand der Kennung ausgewählten vordefinierten Brühprogramms gestartet. Denkbar ist, dass entweder die Brühkammer sofort wieder geöffnet wird oder der Sicherheitsbetrieb gestartet wird, falls keine bekannte Kennung erkannt wird.

Gemäß einer weiteren bevorzugten Ausführungsform der vorliegenden Erfindung ist vorgesehen, dass im zweiten Verfahrensschritt das bewegliche Brühkammerelement in der Ladestellung zumindest teilweise unterhalb des Kapselzuführschachts angeordnet ist und beim Verfahren von der Ladestellung in die Arbeitsstellung zunächst kurzzeitig rückwärts in eine vom unbeweglichen Brühkammerelement abgewandte Richtung bewegt und erst anschließend in Richtung des unbeweglichen Brühkammerelements verfahren wird. In vorteilhafter Weise liegt eine Portionskapsel, welche durch den Kapselzuführschacht fällt und die Blockiervorrichtung passiert, zunächst auf der Oberseite des beweglichen Brühkammerelements auf. In diesem Zustand ist sichergestellt, dass keine zweite Portionskapsel eingeführt werden kann. Beim Überführen von der Ladestellung in die Arbeitsstellung wird das bewegliche Brühkammerelement kurzzeitig soweit zurückgefahren, dass die Portionskapsel nicht mehr auf der Oberseite des beweglichen Brühkammerelements aufliegt und somit auf die Höhe des beweglichen Brühkammerelements fällt. Dort bleibt die Portionskapsel auf einer geeigneten Auflage liegen. Anschließend wird das bewegliche Brühkammerelement in Richtung des unbeweglichen Brühkammerelements verfahren und die Brühkammer geschlossen.

Ein weiterer Gegenstand der vorliegenden Erfindung ist eine Portionskapselmaschine zur Herstellung eines Getränks aus einer Portionskapsel, wobei die Portionskapselmaschine ein bewegliches Brühkammerelement und ein unbewegliches Brühkammerelement aufweist, wobei das bewegliche Brühkammerelement mittels eines Motors zwischen einer Ladestellung, in welcher das bewegliche Brühkammerelement und das unbewegliche Brühkammerelement zum Einbringen einer Portionskapsel voneinander beabstandet sind, und einer Arbeitsstellung, in welcher das bewegliche Brühkammerelement und das unbewegliche Brühkammerelement zur Bildung einer im Wesentlichen geschlossenen Brühkammer einander angenähert sind, bewegbar ist, wobei die Portionskapselmaschine ferner einen Kapselzuführschacht, durch welchen Portionskapseln dem in der Ladestellung befindlichen beweglichen Brühkammerelement zuführbar sind, aufweist, wobei innerhalb des Kapselzuführschachts eine Blockiervorrichtung angeordnet ist, welche zwischen einer Blockierstellung, in welcher Portionskapseln am Passieren der Blockiervorrichtung gehindert werden, und einer Freigabestellung, in welcher die Blockiervorrichtung für Portionskapseln passierbar ist, mittels eines Antriebs überführbar ist, wobei im Bereich des Kapselzuführschachts oder oberhalb des Kapselzuführschachts ferner ein Kapseldetektor angeordnet ist, welcher ein Passieren einer Portionskapsel detektiert, und wobei die Portionskapselmaschine eine Betätigungsvorrichtung zum Starten des Getränkeherstellungsverfahrens durch einen Benutzer aufweist, wobei die Portionskapselmaschine derart konfiguriert ist, dass in Abhängigkeit eines durch Detektieren einer Portionskapsel durch den Kapseldetektor ausgelösten ersten Startsignals oder eines durch Betätigen der Betätigungsvorrichtung ausgelösten zweiten Startsignals die Blockiervorrichtung von der Freigabestellung in die Blockierstellung verfahren wird, wobei die Portionskapselmaschine ferner derart konfiguriert ist, dass nach Verstreichen einer ersten Zeitspanne seit Auslösen des zweiten Startsignals das bewegliche Brühkammerelement von der Ladestellung in die Arbeitsstellung überführt wird.

Auch diese erfindungsgemäße Portionskapselmaschine hat gegenüber dem Stand der Technik den Vorteil, dass durch das mittels Motor bewegte Brühkammerelement der Bedienungskomfort des Benutzers erhöht und zugleich durch die Kombination aus Zeitverzögerung zwischen Betätigen der Betätigungsvorrichtung und Überführung des beweglichen Brühkammerelements von der Ladestellung in die Arbeitsstellung, Kapseldetektor und Blockiervorrichtung die Betriebssicherheit erheblich verbessert wird, da die Gefahr eines Einklemmens einer Portionskapsel ausgeschlossen wird. Zudem ist die erfindungsgemäße Portionskapselmaschine vergleichsweise einfach und kostengünstig herstellbar.

Der wesentliche Unterschied zu dem zuerst erläuterten Gegenstand besteht darin, dass in der Ausgangslage, also vor einer Interaktion des Benutzers mit der Portionskapselmaschine, die Blockiervorrichtung in der Freigabestellung vorliegt. Dies ermöglicht es dem Benutzer in vorteilhafter Weise, zuerst eine Portionskapsel in das Gerät einzuführen, bevor eine Betätigung der Betätigungsvorrichtung erfolgt. Der Fachmann erkennt mithin sofort, dass sich somit für den Benutzer lediglich die Reihenfolge der ersten Interaktionen mit der Portionskapselmaschine vertauschen. Musste der Benutzer gemäß dem zuerst erläuterten Gegenstand zunächst die Betätigungsvorrichtung bedienen und anschließend die Portionskapsel in den Kapselzuführungsschacht einführen, so erfolgen bei diesem Gegenstand die Bedienungsschritte in der umgekehrten Reihenfolge.

Die erfindungsgemäße Portionskapselmaschine ist derart konfiguriert, dass stets eine gewisse Zeitspanne nach dem Betätigen der Betätigungsvorrichtung das bewegliche Brühkammerelement von der Ladestellung in die Arbeitsstellung verfahren wird. Vorzugsweise ist die Portionskapselmaschine derart konfiguriert, dass in Abhängigkeit des durch Betätigen der Betätigungsvorrichtung ausgelösten zweiten Startsignals das bewegliche Brühkammerelement zunächst in die Ladestellung überführt wird. Auch hier wird also in vorteilhafter Weise das bewegliche Brühkammerelement unabhängig von möglicherweise fehlerhaften Sensorsignalen gesteuert, wodurch die Betriebssicherheit weiter erhöht wird.

Die Portionskapselmaschine ist erfindungsgemäß derart konfiguriert, dass im Falle des Einführens einer Kapsel durch den Kapseldetektor ein erstes Startsignal ausgelöst wird, wodurch die Blockiervorrichtung von der Freigabestellung in die Blockierstellung verfahren wird. Das Einführen einer weiteren Portionskapsel und somit ein mögliches Verklemmen der weiteren Portionskapsel wird somit in vorteilhafter Weise verhindert.

Weiterhin ist die Portionskapselmaschine erfindungsgemäß derart konfiguriert, dass durch die Betätigung der Betätigungsvorrichtung ein zweites Startsignal ausgelöst wird und daraufhin die Blockiervorrichtung von der Freigabestellung in die Blockierstellung verfahren wird. Somit wird für den Fall eines fehlerhaften Kapseldetektors bzw. wenn keine Portionskapsel eingeführt wurde, das verspätete Einführen bzw. das Einführen einer weiteren Portionskapsel verhindert, wodurch vorteilhafterweise eine gefährliche Fehlfunktion vermieden wird.

Vorteilhafte Ausgestaltungen und Weiterbildungen der Erfindung sind den Unteransprüchen, sowie der Beschreibung unter Bezugnahme auf die Zeichnungen entnehmbar.

Der Fachmann erkennt, dass dieser Gegenstand der Erfindung im Wesentlichen dem zuerst erläuterten Gegenstand entspricht, so dass die bezüglich dieses Gegenstands gemachten Ausführungen auch für den nun erläuterten Gegenstand entsprechend gelten und umgekehrt.

Gemäß einer bevorzugten Ausführungsform ist die Portionskapselmaschine derart konfiguriert ist, dass eine Flüssigkeitszuführvorrichtung zum Zuführen von Flüssigkeit in die Brühkammer in Betrieb genommen wird, wenn das bewegliche Brühkammerelement in der Arbeitsstellung befindlich ist und der Kapseldetektor zuvor eine Portionskapsel detektiert hat. In Abhängigkeit des Sensorsignals des Kapseldetektors wird somit vorteilhafterweise die Flüssigkeitszuführvorrichtung betrieben, so dass nicht unnötig, d.h. wenn keine Portionskapsel zugegen ist, Flüssigkeit in die Brühkammer eingeleitet wird. Ein fehlerhaftes Sensorsignal würde bei der Flüssigkeitszuführvorrichtung allerdings nicht zu einer folgenschweren Fehlfunktion führen, durch welche die gesamte Portionskapselmaschine irreversibel beschädigt oder gar der Benutzer der Portionskapselmaschine verletzt werden könnte. Die Flüssigkeitszuführvorrichtung umfasst insbesondere eine Pumpe zum Fördern der Flüssigkeit unter Druck in Richtung der Brühkammer und ein Thermoelement zum Heizen der Flüssigkeit. Denkbar ist, dass die Flüssigkeitszuführvorrichtung ferner einen Durchflussmesser umfasst, welcher die Menge der zur Brühkammer geförderten Flüssigkeit misst.

Gemäß einer weiteren bevorzugten Ausführungsform ist das bewegliche Brühkammerelement in eine Ruhestellung bewegbar, wobei die Ruhestellung vorzugsweise zwischen der Arbeitsstellung und der Ladestellung angeordnet ist, wobei die Portionskapselmaschine insbesondere derart konfiguriert ist, dass das bewegliche Brühkammerelement vor Betätigen der Betätigungsvorrichtung in der Ruhestellung befindlich ist und/oder unmittelbar nach Betätigen der Betätigungsvorrichtung von der Ruhestellung in die Ladestellung überführt wird. Besonders bevorzugt ist die Ruhestellung derart vorgesehen, dass eine Portionskapsel nicht zwischen das bewegliche und das unbewegliche Brühkammerelement gelangen kann, sondern ganz besonders bevorzugt auf einem oberen Rand des beweglichen Brühkammerelements aufliegt. Durch ein anschließendes Verfahren von der Ruhestellung in die Ladestellung kann die Portionskapsel in diesem Fall in die vorgesehen Stellung des beweglichen Brühkammerelements gelangen, insbesondere fallen bzw. gleiten. Somit wird vorteilhafterweise ein Verklemmen der Portionskapsel in der Ruhestellung des beweglichen Brühkammerelementes und somit in einer Ruhestellung der Portionskapselmaschine ausgeschlossen.

Gemäß einer weiteren bevorzugten Ausführungsform weist das bewegliche Brühkammerelement einen Kapselerkennungsdetektor auf, welcher zum Auslesen einer auf der Portionskapsel befindlichen Kennung vorgesehen ist. Besonders bevorzugt weist die Portionskapselmaschine eine Auswerteeinheit zum Vergleichen der detektierten Kennung mit bevorzugt vorgespeicherten Kennungen auf, wobei die Flüssigkeitszufuhrvorrichtung von der Auswerteeinheit derart gesteuert wird, dass die Flüssigkeitszufuhr, insbesondere die Temperatur, der Druck, Wassermenge und/oder Strömungscharakteristik der zugeführten Flüssigkeit, bei Detektion einer bekannten Kennung an ein vordefiniertes Brühprogramm angepasst wird. In vorteilhafter Weise kann die in der Brühkammer befindliche Portionskapsel mittels des Kapselerkennungsdetektors erkannt werden, so dass mittels der Auswerteeinheit zu dem in dieser speziellen Portionskapsel enthaltenen Getränkerohsubstanz das passende Brühprogramm ausgesucht und initialisiert werden kann. Denkbar ist, dass die Erkennungsprozedur nur dann gestartet bzw. durchgeführt wird, wenn der Kapseldetektor zuvor die Passage einer Portionskapsel detektiert hat. Eine Anpassung der Strömungscharakteristik kann insbesondere ein Intervallbrühen mit optionalen Pausen umfassen. Denkbar ist, dass in einem ersten Intervall Flüssigkeit zugeführt wird, anschließend in einem zweiten Intervall die Flüssigkeitszufuhr pausiert (damit beispielsweise Tee in der Kapsel ziehen kann) und abschließend in einem dritten Intervall erneut Flüssigkeit zugeführt wird. Die Strömungsgeschwindigkeit und die Menge der zugeführten Flüssigkeit kann zwischen dem ersten und dem dritten Intervall voneinander abweichen.

Gemäß einer weiteren bevorzugten Ausführungsform ist die Portionskapselmaschine derart konfiguriert, dass die Flüssigkeitszuführvorrichtung in einem Sicherheitsbetrieb betrieben wird, in welchem der Brühkammer Flüssigkeit vorzugsweise mit reduzierter Temperatur, reduziertem Druck, reduzierter Wassermenge und/oder geänderter Strömungscharakteristik zugeführt wird, wenn das bewegliche Brühkammerelement in der Arbeitsstellung befindlich ist, wenn der Kapseldetektor zuvor die Passage einer Portionskapsel detektiert hat und wenn die Kapselerkennung noch nicht abgeschlossen ist oder keine bekannte Kennung detektiert wurde. Hierdurch wird vorteilhafterweise eine Gefährdung des Benutzers durch einen Betrieb der Portionskapselmaschine mit einer nicht geeigneten oder ohne eine Portionskapsel, was zum Beispiel zu einem Austritt von heißem Wasser unter Druck führen kann, ausgeschlossen,

Gemäß einer weiteren bevorzugten Ausführungsform ist die Portionskapselmaschine ferner derart konfiguriert, dass entweder nach Verstreichen einer zweiten Zeitspanne seit Auslösen des zweiten Startsignals oder nach Ablauf des vordefinierten Brühprogramms das bewegliche Brühkammerelement von der Arbeitsstellung zurück in die Ruhestellung und/oder Ladestellung überführt wird. Hierdurch wird in besonders vorteilhafter Weise sichergestellt, dass nach einem abgeschlossenem Brühvorgang, oder falls ein Brühvorgang aus bestimmten Gründen nicht erfolgt bzw. nicht erfolgen kann, die Portionskapselmaschine in ihren Ausgangszustand zurückkehrt und somit erneut genutzt werden kann.

Gemäß einer weiteren bevorzugten Ausführungsform weist die Portionskapselmaschine einen weiteren Kapseldetektor auf, welcher vorzugsweise unterhalb des beweglichen Brühkammerelements angeordnet ist und vorzugsweise mit einem Kapselzähler verknüpft ist. Auf diese Weise wird erzielt, dass die Gesamtmenge der Portionskapseln, welche in der Portionskapselmaschine verwendet wurden, überwacht und aufgezeichnet wird. Hierdurch können beispielsweise Serviceintervalle der Maschine eingehalten werden.

Gemäß einer weiteren bevorzugten Ausführungsform umfassen der Kapseldetektor und/oder der weitere Kapseldetektor eine Lichtschranke.

Gemäß einer weiteren bevorzugten Ausführungsform umfasst die Blockiervorrichtung einen beweglichen Pin, welcher mittels eines Antriebs automatisch in den Kapselzuführschacht hinein und aus dem Kapselzuführschacht heraus linear verfahrbar oder schwenkbar ist. Der Kapselzuführschacht wird durch den Pin gesperrt, wenn die Blockiervorrichtung in der Blockierstellung ist, so dass keine Portionskapsel durch den Kapselzuführschacht in Richtung des beweglichen Brühkammerelements gelangen kann.

Noch ein weiterer Gegenstand der vorliegenden Erfindung ist ein Verfahren zum Betrieb der erfindungsgemäßen Portionskapselmaschine, wobei in einem ersten Verfahrensschritt die Blockiervorrichtung von der Freigabestellung in die Blockierstellung überführt wird, wenn ein erstes Startsignal von dem Kapseldetektor oder ein zweites Startsignal von der Betätigungsvorrichtung ausgelöst wird, wobei in einem zweiten Verfahrensschritt nach Verstreichen einer ersten Zeitspanne seit Auslösen des zweiten Startsignals das bewegliche Brühkammerelement von der Ladestellung in die Arbeitsstellung verfahren wird, wobei in einem dritten Verfahrensschritt der Brühkammer Flüssigkeit mittels der Flüssigkeitszuführvorrichtung zugeführt wird, wenn das bewegliche Brühkammerelement in der Arbeitsstellung befindlich ist und der Kapseldetektor zuvor die Passage einer Portionskapsel detektiert hat.

Analog zu der Portionskapselvorrichtung hat auch dieses erfindungsgemäße Verfahren den Vorteil, dass bei gleichzeitiger Erhöhung des Bedienungskomforts die Betriebssicherheit erhöht wird. Bei dem erfindungsgemäßen Verfahren wird in dem ersten Verfahrensschritt in Reaktion auf eine eingeführte (und detektierte) Portionskapsel oder in Reaktion auf ein Betätigen der Betätigungsvorrichtung der Kapselzuführschacht durch die Blockiervorrichtung gesperrt, so dass vorteilhafterweise keine weitere Portionskapsel eingeführt werden kann. Dadurch, dass die Blockiervorrichtung auch ohne ein Detektionssignal des Kapseldetektors in die Blockierstellung überführt wird, nämlich bei Betätigen der Betätigungsvorrichtung, wird auch bei einem fehlerhaften Kapseldetektor ein sicherer Betrieb ermöglicht. Überdies wird in dem erfindungsgemäßen Verfahren das bewegliche Brühkammerelement unabhängig von dem Detektionssignal des Kapseldetektors verfahren, was die Betriebssicherheit und Ausfallsicherheit in besonders vorteilhafter Weise weiter erhöht. Ferner ist das erfindungsgemäße Verfahren vorteilhafterweise auf einfache und kostengünstige Weise realisierbar.

Gemäß einer bevorzugten Ausführungsform vor dem zweiten Verfahrensschritt nach Betätigen der Betätigungsvorrichtung das bewegliche Brühkammerelement zunächst von einer Ruhestellung in die Ladestellung verfahren.

Gemäß einer bevorzugten Ausführungsform wird im dritten Verfahrensschritt die Flüssigkeitszuführvorrichtung nach dem Schließen der Brühkammer zunächst in einem Sicherheitsbetrieb betrieben, in welchem vorzugsweise der Brühkammer Flüssigkeit mit reduzierter Temperatur, reduziertem Druck, reduzierter Wassermenge und/oder geänderter Strömungscharakteristik zugeführt wird. Besonders bevorzugt wird während des dritten Verfahrensschrittes eine auf der Portionskapsel befindliche Kennung mittels eines Kapselerkennungsdetektors ausgelesen und mittels einer Auswerteeinheit vorzugsweise mit vorgespeicherten Kennungen verglichen. Ganz besonders bevorzugt wechselt im dritten Verfahrensschritt die Flüssigkeitszuführvorrichtung nur vom Sicherheitsbetrieb in ein zur erkannten Portionskapsel passendes vordefiniertes Brühprogramm, wenn die ausgelesene Kennung von der Auswerteeinheit erkannt und einem bestimmten Brühprogramm zugeordnet wird, wobei im Rahmen des vordefinierten Brühprogramms die Flüssigkeitszufuhr, insbesondere die Temperatur, der Druck, die Wassermenge und/oder die Strömungscharakteristik der zugeführten Flüssigkeit angepasst wird. Somit wird in besonders vorteilhafter Weise ein sicherer Betrieb auch dann ermöglicht, wenn keine Portionskapsel eingelegt wurde oder eine nicht für die Portionskapselmaschine geeignete Portionskapsel verwendet wurde. Die Gefahr einer Beschädigung der Portionskapselmaschine oder gar einer Gefährdung des Benutzers wird hierdurch ausgeschlossen.

Gemäß einer bevorzugten Ausführungsform wird der Sicherheitsbetrieb abgebrochen und das bewegliche Brühkammerelement zurück in die Ruhestellung verfahren, sobald die Betätigungsvorrichtung während des Sicherheitsbetriebs durch den Benutzer ausgelöst wird. Hierdurch wird in vorteilhafter Weise ein Benutzerabbruch ermöglicht, falls dieser das Fehlen einer Portionskapsel oder die versehentliche Wahl einer nicht geeigneten Portionskapsel bemerkt.

Gemäß einer bevorzugten Ausführungsform wird in einem vierten Verfahrensschritt das bewegliche Brühkammerelement von der Arbeitsstellung zurück in die Ruhestellung und/oder die Ladestellung verfahren, sobald eine zweite Zeitspanne seit Auslösen des zweiten Startsignals verstrichen ist oder das vordefinierte Brühprogramm endet. Vorteilhafterweise wird das System somit in seinen Ausgangszustand versetzt, insbesondere auch dann, wenn eine Flüssigkeitszufuhr nicht möglich gewesen ist. Hierdurch wird insbesondere die Wartung bzw. Reparatur vereinfacht.

Gemäß einer weiteren bevorzugten Ausführungsform wird die Anzahl der in der Portionskapselmaschine verwendeten Portionskapseln von einem unterhalb des beweglichen Brühkammerelements angeordneten weiteren Kapseldetektor gezählt. Auf diese Weise können vorteilhafterweise beispielsweise Serviceintervalle nachvollzogen und geplant werden.

Gemäß einer weiteren bevorzugten Ausführungsform wird im ersten Verfahrensschritt die Blockiervorrichtung nach Verstreichen einer dritten Zeitspanne, insbesondere seit Auslösen des ersten und/oder zweiten Startsignals, von der Blockierstellung zurück in die Freigabestellung überführt. Besonders bevorzugt ist die dritte Zeitspanne länger als die erste und/oder zweite Zeitspanne. In vorteilhafter Weise wird somit sichergestellt, dass die Ausgangsposition erst dann wieder eingenommen wird, wenn das bewegliche Brühkammerelement sich in der Arbeitsstellung bzw. erneut in der Ruhestellung befindet. Insbesondere befindet sich die Blockiervorrichtung während eines Brühvorgangs in der Blockierstellung, so dass keine weitere Portionskapsel eingeführt werden kann.

Gemäß einer weiteren bevorzugten Ausführungsform wird im dritten Verfahrensschritt, insbesondere nach dem Schließen der Brühkammer, zunächst eine auf der Portionskapsel befindliche Kennung mittels eines Kapselerkennungsdetektors ausgelesen und mittels einer Auswerteeinheit mit vorzugsweise vorgespeicherten Kennungen verglichen und wobei anschließend der Brühkammer Flüssigkeit mittels der Flüssigkeitszuführvorrichtung gemäß einem vordefinierten Brühprogramm zugeführt wird, wenn die ausgelesene Kennung von der Auswerteeinheit erkannt und einem vordefinierten Brühprogramm zuordenbar ist, wobei im Rahmen des vordefinierten Brühprogramms die Flüssigkeitszufuhr insbesondere die Temperatur, der Druck, die Wassermenge und/oder die Strömungscharakteristik der zugeführten Flüssigkeit angepasst wird.

Gemäß einer bevorzugten Ausführungsform ist im zweiten Verfahrensschritt das bewegliche Brühkammerelement in der Ladestellung und/oder der Ruhestellung zumindest teilweise unterhalb des Kapselzuführschachts angeordnet und wird beim Verfahren von der Ladestellung in die Arbeitsstellung zunächst kurzzeitig rückwärts in eine vom unbeweglichen Brühkammerelement abgewandte Richtung bewegt und erst anschließend in Richtung des unbeweglichen Brühkammerelements verfahren.

Weitere Einzelheiten, Merkmale und Vorteile der Erfindung ergeben sich aus den Zeichnungen, sowie aus der nachfolgenden Beschreibung von bevorzugten Ausführungsformen anhand der Zeichnungen. Die Zeichnungen illustrieren dabei lediglich beispielhafte Ausführungsformen der Erfindung, welche den wesentlichen Erfindungsgedanken nicht einschränken.

### Kurze Beschreibung der Figuren

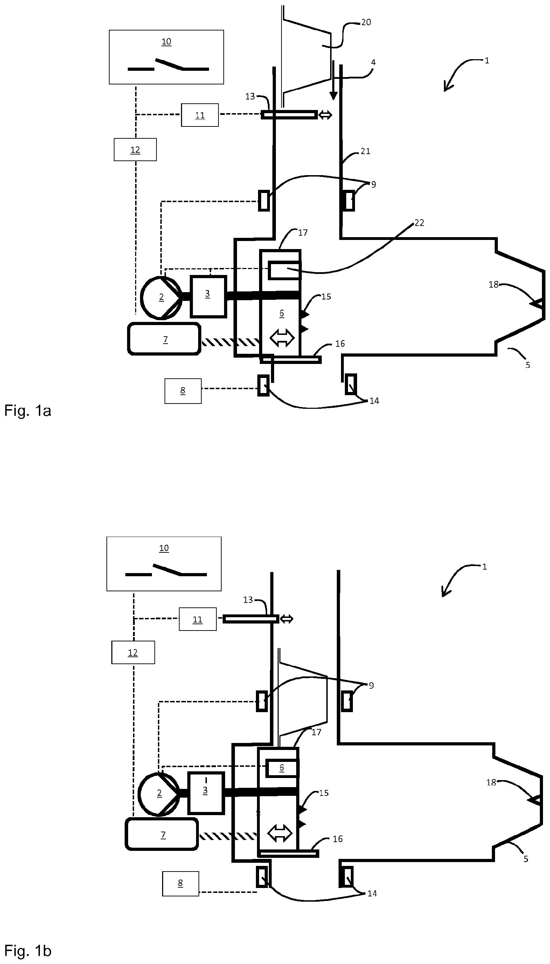

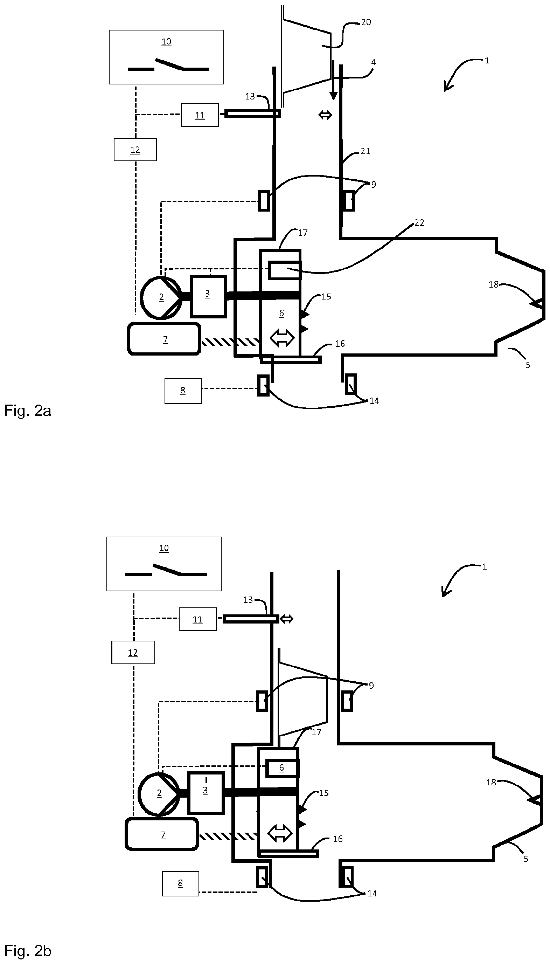

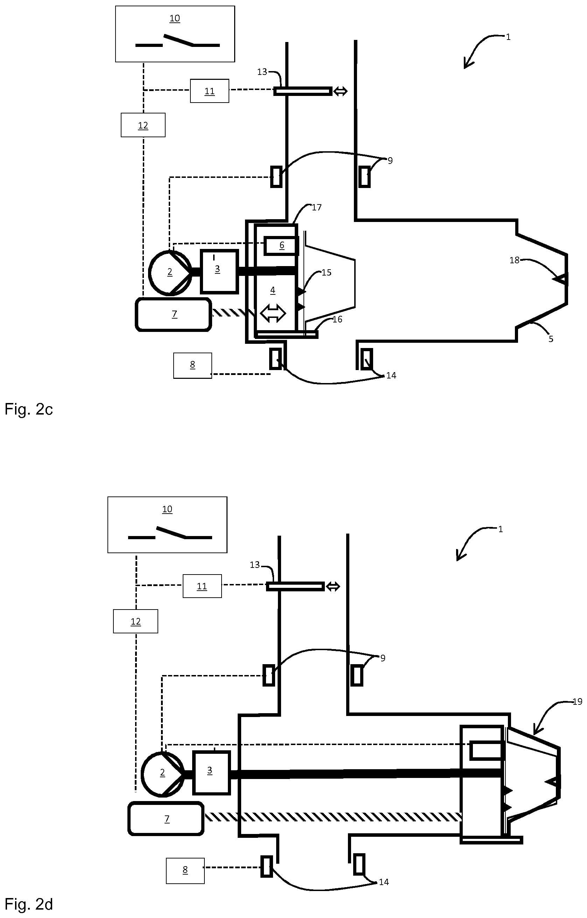

Figuren 1a bis 1d sowie Figuren 2a bis 2d zeigen schematische Schnittbildansichten einer Portionskapselmaschine zur Herstellung von Getränken aus Portionskapseln sowie eines Verfahrens zum Betrieb der Portionskapselmaschine gemäß beispielhafter Ausführungsformen der vorliegenden Erfindung.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

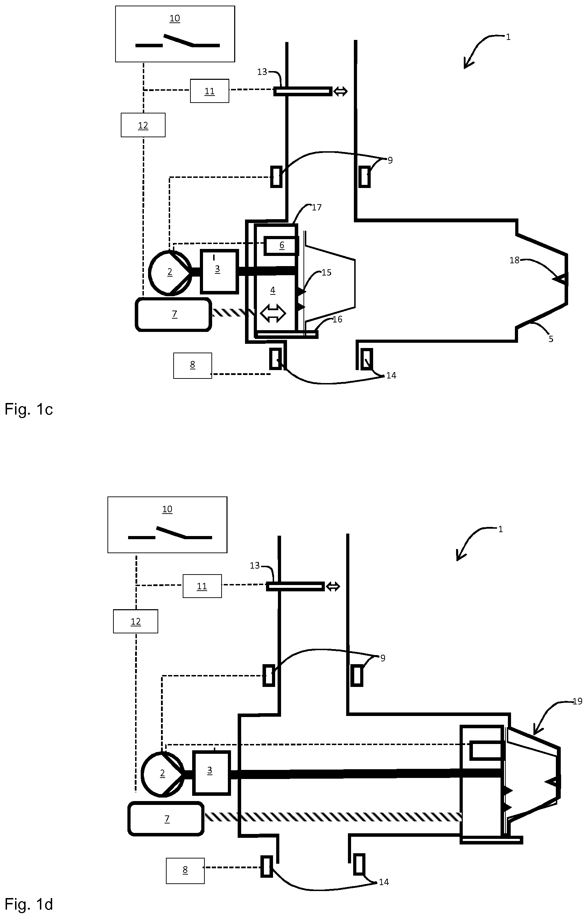

In den **Figuren 1a bis 1d** sind schematische Schnittbildansichten einer Portionskapselmaschine 1 zur Herstellung eines Getränks mittels Portionskapseln 20 gemäß einer beispielhaften Ausführungsform der vorliegenden Erfindung dargestellt. Die Portionskapselmaschine 1 umfasst dabei einen Kapselzuführschacht 21, durch welchen der Portionskapselmaschine 1 Portionskapseln 20 zuführbar sind. Ferner umfasst die Portionskapselmaschine 1 ein glockenförmig ausgebildeten unbewegliches Brühkammerelement 5, sowie ein bewegliches Brühkammerelement 6, welches als Verschlusselement für das unbewegliche Brühkammerelement 5 fungiert. Das bewegliche Brühkammerelement 6 ist hierfür mittels eines Motors 7 zwischen einer Ladestellung (illustriert in Figur 1a), in welcher das unbewegliche Brühkammerelement 5 vom beweglichen Brühkammerelement 6 zur Aufnahme einer neuen Portionskapsel 20 beabstandet ist, und einer Arbeitsstellung (illustriert in Figur 1d), in welcher das bewegliche Brühkammerelement 6 an das unbewegliche Brühkammerelement 5 zur Bildung einer hermetisch dichten Brühkammer 19 angenähert ist, automatisch verfahrbar. An der Unterseite des beweglichen Brühkammerelements 6 ist eine Kapselauflage 16 angeordnet, auf welcher in der Ladestellung ein Kapselflansch einer zugeführten Portionskapsel 20 aufliegen kann. Das bewegliche Brühkammerelement 6 ist mit ersten Perforationsmitteln 15 versehen, während das unbewegliche Brühkammerelement 5 ein zentrales zweites Perforationsmittel 18 aufweist. Das bewegliche Brühkammerelement 6 steht zudem in Fluidverbindung mit einer Flüssigkeitszuführvorrichtung umfassend eine Pumpe 2 und ein Thermoelement 3 (Heizung), um der Brühkammer 19 heiße Flüssigkeit zur Erzeugung des Getränks unter Druck zuzuleiten. In das bewegliche Brühkammerelement 6 ist ferner ein Kapselerkennungsdetektor 22 integriert, welcher zum Auslesen einer auf den Kapseldeckel aufgedruckten Kennung, wie beispielsweise einen Datamatrix-Code (QR-Code), Barcode oder dergleichen, vorgesehen ist.

Die Portionskapsel 20 umfasst einen aus Kunststoff gefertigten und topfförmig ausgebildeten Kegelstumpf. Der Kegelstumpf wird mittels eines aus Kunststoff- oder Aluminiumfolie gefertigten Kapseldeckels luftdicht verschlossen. Innerhalb der Portionskapsel 20 befindet sich eine Getränkerohsubstanz, beispielsweise extrahierbares Röstkaffeegranulat, Instantkaffeepulver, geschnittene Teeblätter, lösliche Milch- und/oder Schokoladensubstanz. Optional weist die Portionskapsel 20 ein nicht abgebildetes Filterelement auf, welches zwischen dem Kapselboden und der Getränkesubstanz angeordnet ist. Das Filterelement umfasst vorzugsweise ein Textil aus Natur- und/oder Kunstfasern, beispielsweise ein Papier, ein Vlies oder ein Filz. Der Kapseldeckel ist im Bereich eines Kapselflansches mit dem Kegelstumpf verklebt oder verschweißt.

Im Kapselzuführschacht 21 ist eine Blockiervorrichtung 13 angeordnet, welche einen Pin umfasst, welcher zwischen einer Blockierstellung (siehe Figur 1a) und einer Freigabestellung (siehe Figur 1b) verfahrbar ist. In der Blockierstellung kann die Portionskapsel 20 die Blockiervorrichtung 13 nicht passieren, während in der Freigabestellung das Passieren ermöglicht wird. Zwischen dem beweglichen Brühkammerelement 6 und der Blockiervorrichtung 13 ist ferner ein Kapseldetektor 9 in Form einer Lichtschranke angeordnet, welcher ein Passieren einer Portionskapsel 20 detektiert. Analog ist unterhalb des beweglichen Brühkammerelements 6 ein weiterer Kapseldetektor 14 angeordnet, welcher mit einem Kapselzähler 8 gekoppelt ist, um die aus der Brühkammer 19 ausgeworfenen Portionskapseln 20 nummerisch zu erfassen.

Die Portionskapselmaschine 1 weist ferner eine Betätigungsvorrichtung 10 auf, welche durch einen Benutzer manuell zu betätigen ist, um einen Getränkeherstellungsprozess einzuleiten. Die Betätigungsvorrichtung 10 kann ein einfacher Schalter bzw. Druckknopf oder ein berührungssensitiver Bildschirm in Form eines Touchpad sein.

Nachfolgend wird anhand der Figuren 1a bis 1d das Verfahren zum Betrieb der erfindungsgemäßen Portionskapselmaschine 1 näher erläutert:
In **Figur 1a** befindet sich das bewegliche Brühkammerelement 6 in der Ladestellung, während die Blockiervorrichtung 13 in der Blockierstellung verweilt. In den Kapselzuführschacht 21 kann nun manuell durch einen Benutzer oder automatisch durch ein automatisches Ladesystem eine Portionskapsel 20 entlang einer Einwurfrichtung 4 eingelegt werden. Da die Blockiervorrichtung 13 in der Blockierstellung ist, bleibt die Portionskapsel 20 auf dem Pin liegen. Das Einlegen einer weiteren Portionskapsel 20 wird somit unterbunden. Zum Starten des Getränkeherstellungsprozess zu starten, wird seitens des Benutzers nun die Betätigungsvorrichtung 10 betätigt.

In **Figur 1b** wird in Folge eines durch die Betätigung der Betätigungsvorrichtung 10 ausgelöstes Startsignal die Blockvorrichtung 13 von der Blockierstellung in die Freigabestellung verfahren. Die Portionskapsel 20 fällt somit durch den Kapselzuführschacht 21 und bleibt mit ihrem Flansch auf der Oberseite 17 des beweglichen Brühkammerelements 6 liegen. Die Lichtschranke des Kapseldetektors 9 wird durch die Portionskapsel 20 unterbrochen.

In **Figur 1c** ist dargestellt, dass nach Ablauf einer ersten Zeitspanne 12 seit Auslösen des Startsignals das bewegliche Brühkammerelement 6 mittels des Motors 7 von der Ladestellung zur Arbeitsstellung verfahren wird. Dabei wird das bewegliche Brühkammerelement 6 zunächst ein kleines Stück in eine vom unbeweglichen Brühkammerelement 5 abgewandte Richtung bewegt, wodurch der Flansch der Portionskapsel 20 von der Oberseite17 des beweglichen Brühkammerelements 6 rutscht und auf die Kapselauflage 16 fällt. Dieser Zeitpunkt ist in Figur 1c dargestellt. Nach Ablauf einer dritten Zeitspanne 11 seit dem Auslösen des Startsignals wird die Blockiervorrichtung 13 von der Freigabestellung zurück in die Blockierstellung verfahren. Die dritte Zeitspanne 11 ist insbesondere kürzer als die erste Zeitspanne 12, so dass der Kapselzuführschacht 21 wieder verschlossen ist, bevor der Motor 7 das bewegliche Brühkammerelement 6 bewegt.

Nachdem das bewegliche Brühkammerelement 6 kurzzeitig in die vom unbeweglichen Brühkammerelement 5 abgewandte Richtung gefahren wurde, wird das bewegliche Brühkammerelement 6 in Richtung des unbeweglichen Brühkammerelements 5 gefahren, bis der Kapselflansch zwischen dem beweglichen und dem unbeweglichen Brühkammerelementen 5, 6 dichtend eingeklemmt wird. Dieser Zustand ist in **Figur 1d** illustriert. Es entsteht eine hermetisch geschlossene Brühkammer 19, in welcher die Portionskapsel 20 eingeschlossen ist. Durch das Schließen der Brühkammer 19 wird der Kapseldeckel durch die ersten Perforationsmittel 15 perforiert, während im Bodenbereich der Portionskapsel 20 eine Öffnung mittels des zweiten Perforationsmittels 18 erzeugt wird. Wenn nun ein Detektionssignal des Kapseldetektors 9 vorliegt, wonach zuvor eine Portionskapsel 20 den Kapselzuführschacht 21 passiert hat, wird die Flüssigkeitszuführvorrichtung in einem Sicherheitsbetrieb gestartet. Falls kein solches Detektionssignal vorliegt, wird der Sicherheitsbetrieb nicht gestartet und das bewegliche Brühkammerelement 6 nach Ablauf einer kurzen zweiten Zeitspanne zurück in die Ladestellung verfahren, damit keine Flüssigkeit unnötig in die leere Brühkammer 19 gepumpt wird. Der Sicherheitsbetrieb umfasst einen Betrieb, bei welchem bevorzugt Flüssigkeit unter niedrigerer Temperatur und niedrigerem Druck als beim normalen Brühprozess in die Brühkammer 19 eingeleitet wird. Auf diese Weise wird sichergestellt, dass - falls eine unbekannte, systemfremde Portionskapsel in der Brühkammer 19 angeordnet sein sollte - keine Gefährdung des Benutzers durch ein Platzen dieser unbekannten, systemfremden Portionskapsel auftritt.

Während des Starts des Sicherheitsbetriebs wird mittels des Kapselerkennungsdetektors 22 eine Kennung auf dem Portionskapsel 20 ausgelesen. Wenn eine Kennung ausgelesen werden kann, wird diese Kennung von einer Auswerteeinheit (nicht dargestellt) bevorzugt mit vorgespeicherten Kennungen verglichen. Anhand der Kennung wird somit der Kapseltyp erkannt und ein speziell für diesen Kapseltyp passendes Brühprogramm ausgewählt. Die Flüssigkeitszuführvorrichtung wird sodann mit den Brühparametern des ausgewählten Brühprogramms versorgt, so dass die Temperatur, der Druck und die Menge der in die Brühkammer 19 eingeleiteten Flüssigkeit, insbesondere Wasser, entsprechend des ausgewählten Brühprogramms gewählt werden und/oder die Strömungscharakteristik in entsprechender Weise angepasst wird. Durch Einleiten der Flüssigkeit durch den perforierten Kapseldeckel in das Innere der Kapsel, wechselwirkt die Flüssigkeit mit der in der Kapsel befindlichen Getränkerohsubstanz, wodurch sich das gewünschte Getränk bildet. Das Getränk verlässt die Portionskapsel 20 anschließend durch das Perforationsloch im Bodenbereich und wird sodann in ein Auffanggefäß (nicht dargestellt) geleitet.

Nach Ablauf des Brühprogramms wird die Zuführung von Flüssigkeit abgeschaltet und das bewegliche Brühkammerelement 6 von der Arbeitsstellung zurück in die Ladestellung verfahren. Während der Rückwärtsbewegung des beweglichen Brühkammerelements 6 wird die Portionskapsel 20 mittels eines nicht dargestellten Kapselauswerfers von der Kapselauflage 16 geschoben und fällt am weiteren Kapseldetektor 14 vorbei in einen Auffangbehälter (nicht dargestellt) für Altkapseln. Die Anzahl der verwendeten Portionskapseln 20 wird mittels des Kapselzählers 8 registriert. Die Portionskapselmaschine 1 ist nunmehr bereit mit einer neuen Portionskapsel 20 beladen zu werden.

Denkbar ist alternativ aber auch, dass unabhängig vom Kapseldetektor ein Brühbetrieb gemäß eines vom Benutzer ausgewählten Brühprogramms oder eines fest voreingestellten Brühprogramm ausgeführt wird.

In einer alternativen weiteren Ausführungsform der vorliegenden Erfindung weist die Portionskapselmaschine 1 keinen Kapselerkennungsdetektor auf. Das passende Brühprogramm ist in diesem Fall voreingestellt oder wird manuell von dem Benutzer ausgewählt. Ferner ist denkbar, dass kein weiterer Kapseldetektor 14 vorgesehen ist.

In den **Figuren 2a bis 2d** sind schematische Schnittbildansichten einer Portionskapselmaschine 1 zur Herstellung eines Getränks mittels Portionskapseln 20 gemäß einer weiteren beispielhaften Ausführungsform der vorliegenden Erfindung dargestellt. Dabei weist die Portionskapselmaschine 1 im Wesentlichen die gleichen Elemente wie die Portionskapselmaschine 1 gemäß der in den **Figuren 1a bis 1d** dargestellten Ausführungsform auf. Daher wird generell auf die obigen Ausführungen verwiesen.

Im Unterschied zu der Ausführungsform gemäß den Figuren **1a bis 1d** befindet sich die Blockiervorrichtung 13 im Ausgangszustand der **Figur 2a** in der Freigabestellung, d.h. der Pin ist zurückgezogen, so dass eine eingeführte Portionskapsel 20 die Blockiervorrichtung passieren kann.

In Figur 2b ist dargestellt wie die Portionskapsel 20 im Kapselzuführungsschacht 21 angeordnet ist. Hier ruht sie auf dem beweglichen Brühkammerelement 6, welches sich in einer Ruhestellung befindet, wobei die Ruhestellung zwischen der Ladestellung, in welcher die Portionskapsel 20 wie in **Figur 2c** gezeigt in den Raum zwischen dem beweglichen Brühkammerelement 6 und dem unbeweglichen Brühkammerelement 5 gelangen kann, und der Arbeitsstellung, in welcher die Brühkammer bestehend aus dem beweglichen und unbeweglichen Brühkammerelement 5, 6 gebildet wird und die Portionskapsel 20 einschließt.

In der Ruhestellung detektiert der Kapseldetektor 9 die Portionskapsel 20, hier wird beispielsweise die Lichtschranke durch die Portionskapsel 20 unterbrochen. Dies löst ein erstes Startsignal aus, woraufhin die Blockiervorrichtung 13, ggf. nach einer dritten Zeitspanne 11, von der Freigabestellung in die Blockierstellung überführt wird, wie in **Figur 2c** zu sehen ist. Auf diese Art und Weise kann keine weitere Portionskapsel 20 in den Kapselzuführungsschacht 21 gelangen und eventuell das bewegliche Brühkammerelement 6 blockieren.

Nun wird durch das Betätigen der Betätigungsvorrichtung 10 durch den Benutzer ein zweites Startsignal ausgelöst, welches eine Bewegung des beweglichen Brühkammerelements 6 in die Ladestellung bewirkt. Dies ist in **Figur 2c** dargestellt. Durch eine mögliche Zeitverzögerung um eine Zeitspanne nach Auslösen des zweiten Startsignals wird sichergestellt, dass auch die eingeworfene Portionskapsel 20 nicht verklemmt und das bewegliche Brühkammerelement 6 blockiert.

Nach einer dritten Zeitspanne wird die Blockiervorrichtung 13 wieder in die Freigabestellung überführt. Diese dritte Zeitspanne kann insbesondere seit Auslösen des zweiten Startsignals aus gemessen sein, so dass die Blockiervorrichtung 13 erst nach Abschluss des Brühprogramms wieder in die Freigabstellung überführt wird.

Wird also eine Portionskapsel 20 in den Kapselzuführungsschacht 21 eingeführt und anschließend die Betätigungsvorrichtung 10 betätigt, so wird die Blockiervorrichtung 13 in die Blockierstellung überführt und der Motor 7 aktiviert, der das bewegliche Brühkammerelement 6 bewegt. Nach Erreichen der Arbeitsstellung wird über die Flüssigkeitszuführvorrichtung Wasser durch die in der Brühkammer befindliche Portionskapsel 20 geleitet, das Brühprogramm, dass ggf. durch Detektion einer Kennung durch den Kapselerkennungsdetektor 22 identifiziert wurde, also eingeleitet. Nach Abschluss des Brühvorgangs wird die Portionskapsel 20 ausgeworfen und das bewegliche Brühkammerelement 6 in die Ruhestellung bzw. die Ladestellung verfahren sowie die Blockiervorrichtung 13 wieder in die Freigabestellung überführt.

Wenn keine Portionskapsel 20 eingeworfen wurde bzw. der Kapseldetektor 9 beispielsweise auf Grund einer Fehlfunktion keine Portionskapsel 20 detektiert, so wird durch das Betätigen der Betätigungsvorrichtung 10 eine Überführung der Blockiervorrichtung 13 in die Blockierstellung veranlasst. Im Übrigen läuft das Verfahren genau so ab, als ob eine Portionskapsel 20 eingeworfen worden wäre, deren Kennung nicht durch den Kapselerkennungsdetektor 22 erkannt werden kann.

Nachfolgend werden verschiedene Ausführungsform offenbart:
Ausführungsform 1:
   Portionskapselmaschine (1) zur Herstellung eines Getränks aus einer Portionskapsel (20), wobei die Portionskapselmaschine (1) ein bewegliches Brühkammerelement (6) und ein unbewegliches Brühkammerelement (5) aufweist, wobei das bewegliche Brühkammerelement (6) mittels eines Motors (7) zwischen einer Ladestellung, in welcher das bewegliche Brühkammerelement (6) und das unbewegliche Brühkammerelement (5) zum Einbringen einer Portionskapsel (20) voneinander beabstandet sind, und einer Arbeitsstellung, in welcher das bewegliche Brühkammerelement (6) und das unbewegliche Brühkammerelement (5) zur Bildung einer im Wesentlichen geschlossenen Brühkammer (19) einander angenähert sind, bewegbar ist, wobei die Portionskapselmaschine (1) ferner einen Kapselzuführschacht (21), durch welchen Portionskapseln (20) dem in der Ladestellung befindlichen beweglichen Brühkammerelement (6) zuführbar sind, aufweist, wobei innerhalb des Kapselzuführschachts (21) eine Blockiervorrichtung (13) angeordnet ist, welche zwischen einer Blockierstellung, in welcher Portionskapseln (20) am Passieren der Blockiervorrichtung (13) gehindert werden, und einer Freigabestellung, in welcher die Blockiervorrichtung (13) für Portionskapseln (20) passierbar ist, mittels eines Antriebs überführbar ist, wobei im Bereich des Kapselzuführschachts (21) oder oberhalb des Kapselzuführschachts (21) ferner ein Kapseldetektor (9) angeordnet ist, welcher ein Passieren einer Portionskapsel (20) detektiert, und wobei die Portionskapselmaschine (1) eine Betätigungsvorrichtung (10) zum Starten des Getränkeherstellungsverfahrens durch einen Benutzer aufweist, wobei die Portionskapselmaschine (1) derart konfiguriert ist, dass in Abhängigkeit eines durch Betätigen der Betätigungsvorrichtung (10) ausgelösten Startsignals die Blockiervorrichtung (13) von der Blockierstellung in die Freigabestellung verfahren wird, dadurch gekennzeichnet, dass die Portionskapselmaschine (1) ferner derart konfiguriert ist, dass nach Verstreichen einer ersten Zeitspanne (12) seit Auslösen des Startsignals das bewegliche Brühkammerelement (6) von der Ladestellung in die Arbeitsstellung überführt wird und wobei die Portionskapselmaschine (1) derart konfiguriert ist, dass eine Flüssigkeitszuführvorrichtung zum Zuführen von Flüssigkeit in die Brühkammer (19) in Betrieb genommen wird, wenn das bewegliche Brühkammerelement (6) in der Arbeitsstellung befindlich ist und der Kapseldetektor (9) zuvor eine Portionskapsel (20) detektiert hat.
Ausführungsform 2:
   Portionskapselmaschine (1) nach Ausführungsform 1, wobei das bewegliche Brühkammerelement einen Kapselerkennungsdetektor (22) aufweist, welcher zum Auslesen einer auf der Portionskapsel (20) befindlichen Kennung vorgesehen ist.
Ausführungsform 3:
   Portionskapselmaschine (1) nach Ausführungsform 2, wobei die Portionskapselmaschine (1) eine Auswerteeinheit zum Vergleichen der detektierten Kennung mit bevorzugt vorgespeicherten Kennungen aufweist und wobei die Flüssigkeitszufuhrvorrichtung von der Auswerteeinheit derart gesteuert wird, dass die Flüssigkeitszufuhr insbesondere die Temperatur, der Druck, Wassermenge und/oder Strömungscharakteristik der zugeführten Flüssigkeit, bei Detektion einer bekannten Kennung an ein vordefiniertes Brühprogramm angepasst wird.
Ausführungsform 4:
   Portionskapselmaschine (1) nach Ausführungsform 3, wobei die Portionskapselmaschine (1) derart konfiguriert ist, dass die Flüssigkeitszuführvorrichtung in einem Sicherheitsbetrieb betrieben wird, in welchem der Brühkammer (19) Flüssigkeit vorzugsweise mit reduzierter Temperatur, reduziertem Druck, reduzierter Wassermenge und/oder geänderter Strömungscharakteristik zugeführt wird, wenn das bewegliche Brühkammerelement (6) in der Arbeitsstellung befindlich ist, wenn der Kapseldetektor (9) zuvor die Passage einer Portionskapsel (20) detektiert hat und wenn die Kapselerkennung noch nicht abgeschlossen ist oder keine bekannte Kennung detektiert wurde.
Ausführungsform 5:
   Portionskapselmaschine (1) nach einer der vorhergehenden Ausführungsformen, wobei die Portionskapselmaschine (1) ferner derart konfiguriert ist, dass entweder nach Verstreichen einer zweiten Zeitspanne seit Auslösen des Startsignals oder nach Ablauf des vordefinierten Brühprogramms das bewegliche Brühkammerelement (6) von der Arbeitsstellung zurück in die Ladestellung überführt wird.
Ausführungsform 6:
   Portionskapselmaschine (1) nach einer der vorhergehenden Ausführungsformen, wobei die Portionskapselmaschine (1) einen weiteren Kapseldetektor (14) aufweist, welcher vorzugsweise unterhalb des beweglichen Brühkammerelements (6) angeordnet ist und vorzugsweise mit einem Kapselzähler (8) verknüpft ist.
Ausführungsform 7:
   Portionskapselmaschine (1) nach einer der vorhergehenden Ausführungsformen, wobei der Kapseldetektor (9) und/oder der weitere Kapseldetektor (14) eine Lichtschranke umfassen.
Ausführungsform 8:
   Portionskapselmaschine (1) nach einer der vorhergehenden Ausführungsformen, wobei die Blockiervorrichtung (13) einen beweglichen Pin umfasst, welcher mittels eines Antriebs automatisch in den Kapselzuführschacht (21) hinein und aus dem Kapselzuführschacht (21) heraus linear verfahrbar oder schwenkbar ist.
Ausführungsform 9:
   Verfahren zum Betrieb einer Portionskapselmaschine (1) nach einer der vorhergehenden Ausführungsformen, wobei in einem ersten Verfahrensschritt die Blockiervorrichtung (13) von der Blockierstellung in die Freigabestellung überführt wird, wenn ein Startsignal von der Betätigungsvorrichtung (10) ausgelöst wird, dadurch gekennzeichnet, dass in einem zweiten Verfahrensschritt nach Verstreichen einer ersten Zeitspanne (12) seit Auslösen des Startsignals das bewegliche Brühkammerelement (6) von der Ladestellung in die Arbeitsstellung verfahren wird, wobei in einem dritten Verfahrensschritt der Brühkammer (19) Flüssigkeit mittels der Flüssigkeitszuführvorrichtung zugeführt wird, wenn das bewegliche Brühkammerelement (6) in der Arbeitsstellung befindlich ist und der Kapseldetektor (9) zuvor die Passage einer Portionskapsel (20) detektiert hat.
Ausführungsform 10:
   Verfahren nach Ausführungsform 9, wobei im dritten Verfahrensschritt die Flüssigkeitszuführvorrichtung nach dem Schließen der Brühkammer (19) zunächst in einem Sicherheitsbetrieb betrieben wird, in welchem vorzugsweise der Brühkammer (19) Flüssigkeit mit reduzierter Temperatur, reduziertem Druck, reduzierter Wassermenge und/oder geänderter Strömungscharakteristik zugeführt wird.
Ausführungsform 11:
   Verfahren nach einer der Ausführungsformen 9 oder 10, wobei während des dritten Verfahrensschrittes eine auf der Portionskapsel (20) befindliche Kennung mittels eines Kapselerkennungsdetektors (22) ausgelesen und mittels einer Auswerteeinheit vorzugsweise mit vorgespeicherten Kennungen verglichen wird.
Ausführungsform 12:
   Verfahren nach Ausführungsform 11, wobei im dritten Verfahrensschritt die Flüssigkeitszuführvorrichtung vom Sicherheitsbetrieb in ein zur erkannten Portionskapsel (20) passendes vordefiniertes Brühprogramm wechselt, nur wenn die ausgelesene Kennung von der Auswerteeinheit erkannt und einem bestimmten Brühprogramm zugeordnet wird, wobei im Rahmen des vordefinierten Brühprogramms die Flüssigkeitszufuhr insbesondere die Temperatur, der Druck, die Wassermenge und/oder die Strömungscharakteristik der zugeführten Flüssigkeit angepasst wird.
Ausführungsform 13:
   Verfahren nach einer der Ausführungsformen 10 bis 12, wobei der Sicherheitsbetrieb abgebrochen wird und das bewegliche Brühkammerelement (6) zurück in die Ladestellung verfahren wird, sobald die Betätigungsvorrichtung (10) während des Sicherheitsbetriebs durch den Benutzer ausgelöst wird.
Ausführungsform 14:
   Verfahren nach einer der Ausführungsformen 9 bis 13, wobei in einem vierten Verfahrensschritt das bewegliche Brühkammerelement (6) von der Arbeitsstellung zurück in die Ladestellung verfahren wird, sobald eine zweite Zeitspanne seit Auslösen des Startsignals verstrichen ist oder das vordefinierte Brühprogramm endet.
Ausführungsform 15:
   Verfahren nach einer der Ausführungsformen 9 bis 14, wobei die Anzahl der in der Portionskapselmaschine (1) verwendeten Portionskapseln (20) von einem unterhalb des beweglichen Brühkammerelements (6) angeordneten weiteren Kapseldetektor (14) gezählt wird.
Ausführungsform 16:
   Verfahren nach einer der Ausführungsformen 9 bis 15, wobei im ersten Verfahrensschritt die Blockiervorrichtung (13) nach Verstreichen einer dritten Zeitspanne (11) von der Freigabestellung zurück in die Blockierstellung überführt wird.
Ausführungsform 17:
   Verfahren nach einer der Ausführungsformen 9 bis 16, wobei im dritten Verfahrensschritt, insbesondere nach dem Schließen der Brühkammer (19), zunächst eine auf der Portionskapsel (20) befindliche Kennung mittels eines Kapselerkennungsdetektors (22) ausgelesen und mittels einer Auswerteeinheit mit vorzugsweise vorgespeicherten Kennungen verglichen wird und wobei anschließend der Brühkammer (19) Flüssigkeit mittels der Flüssigkeitszuführvorrichtung gemäß einem vordefinierten Brühprogramm zugeführt wird, wenn die ausgelesene Kennung von der Auswerteeinheit erkannt und einem vordefinierten Brühprogramm zuordenbar ist, wobei im Rahmen des vordefinierten Brühprogramms die Flüssigkeitszufuhr insbesondere die Temperatur, der Druck, die Wassermenge und/oder die Strömungscharakteristik der zugeführten Flüssigkeit angepasst wird.
Ausführungsform 18:
   Verfahren nach einer der Ausführungsformen 9 bis 17, wobei im zweiten Verfahrensschritt das bewegliche Brühkammerelement (6) in der Ladestellung zumindest teilweise unterhalb des Kapselzuführschachts (21) angeordnet ist und beim Verfahren von der Ladestellung in die Arbeitsstellung zunächst kurzzeitig rückwärts in eine vom unbeweglichen Brühkammerelement (6) abgewandte Richtung bewegt und erst anschließend in Richtung des unbeweglichen Brühkammerelements (6) verfahren wird.
Ausführungsform 19:
   Portionskapselmaschine (1) zur Herstellung eines Getränks aus einer Portionskapsel (20), wobei die Portionskapselmaschine (1) ein bewegliches Brühkammerelement (6) und ein unbewegliches Brühkammerelement (5) aufweist, wobei das bewegliche Brühkammerelement (6) mittels eines Motors (7) zwischen einer Ladestellung, in welcher das bewegliche Brühkammerelement (6) und das unbewegliche Brühkammerelement (5) zum Einbringen einer Portionskapsel (20) voneinander beabstandet sind, und einer Arbeitsstellung, in welcher das bewegliche Brühkammerelement (6) und das unbewegliche Brühkammerelement (5) zur Bildung einer im Wesentlichen geschlossenen Brühkammer (19) einander angenähert sind, bewegbar ist, wobei die Portionskapselmaschine (1) ferner einen Kapselzuführschacht (21), durch welchen Portionskapseln (20) dem in der Ladestellung befindlichen beweglichen Brühkammerelement (6) zuführbar sind, aufweist, wobei innerhalb des Kapselzuführschachts (21) eine Blockiervorrichtung (13) angeordnet ist, welche zwischen einer Blockierstellung, in welcher Portionskapseln (20) am Passieren der Blockiervorrichtung (13) gehindert werden, und einer Freigabestellung, in welcher die Blockiervorrichtung (13) für Portionskapseln (20) passierbar ist, mittels eines Antriebs überführbar ist, wobei im Bereich des Kapselzuführschachts (21) oder oberhalb des Kapselzuführschachts (21) ferner ein Kapseldetektor (9) angeordnet ist, welcher ein Passieren einer Portionskapsel (20) detektiert, und wobei die Portionskapselmaschine (1) eine Betätigungsvorrichtung (10) zum Starten des Getränkeherstellungsverfahrens durch einen Benutzer aufweist, wobei die Portionskapselmaschine (1) derart konfiguriert ist,
   dass in Abhängigkeit
   - eines durch Detektieren einer Portionskapsel (20) durch den Kapseldetektor (9) ausgelösten ersten Startsignals oder
   - eines durch Betätigen der Betätigungsvorrichtung (10) ausgelösten zweiten Startsignals die Blockiervorrichtung (13) von der Freigabestellung in die Blockierstellung verfahren wird,
   wobei die Portionskapselmaschine (1) ferner derart konfiguriert ist, dass in Abhängigkeit des durch Betätigen der Betätigungsvorrichtung (10) ausgelösten zweiten Startsignals das bewegliche Brühkammerelement (6) in die Ladestellung überführt wird, dadurch gekennzeichnet, dass die Portionskapselmaschine (1) ferner derart konfiguriert ist, dass nach Verstreichen einer ersten Zeitspanne (12) seit Auslösen des zweiten Startsignals das bewegliche Brühkammerelement (6) von der Ladestellung in die Arbeitsstellung überführt wird.
Ausführungsform 20:
   Portionskapselmaschine (1) nach Ausführungsform 19, wobei die Portionskapselmaschine (1) derart konfiguriert ist, dass eine Flüssigkeitszuführvorrichtung zum Zuführen von Flüssigkeit in die Brühkammer (19) in Betrieb genommen wird, wenn das bewegliche Brühkammerelement (6) in der Arbeitsstellung befindlich ist und der Kapseldetektor (9) zuvor eine Portionskapsel (20) detektiert hat.
Ausführungsform 21:
   Portionskapselmaschine (1) nach einer der Ausführungsformen 19 oder 20, wobei das bewegliche Brühkammerelement (6) in eine Ruhestellung bewegbar ist, wobei die Ruhestellung vorzugsweise zwischen der Arbeitsstellung und der Ladestellung angeordnet ist, wobei die Portionskapselmaschine (1) insbesondere derart konfiguriert ist, dass das bewegliche Brühkammerelement (6) vor Betätigen der Betätigungsvorrichtung (10) in der Ruhestellung befindlich ist und/oder unmittelbar nach Betätigen der Betätigungsvorrichtung (10) von der Ruhestellung in die Ladestellung überführt wird.
Ausführungsform 22:
   Portionskapselmaschine (1) nach einer der Ausführungsformen 19 bis 21, wobei das bewegliche Brühkammerelement (6) einen Kapselerkennungsdetektor (22) aufweist, welcher zum Auslesen einer auf der Portionskapsel (20) befindlichen Kennung vorgesehen ist.
Ausführungsform 23:
   Portionskapselmaschine (1) nach Ausführungsform 22, wobei die Portionskapselmaschine (1) eine Auswerteeinheit zum Vergleichen der detektierten Kennung mit bevorzugt vorgespeicherten Kennungen aufweist und wobei die Flüssigkeitszufuhrvorrichtung von der Auswerteeinheit derart gesteuert wird, dass die Flüssigkeitszufuhr, insbesondere die Temperatur, der Druck, Wassermenge und/oder Strömungscharakteristik der zugeführten Flüssigkeit, bei Detektion einer bekannten Kennung an ein vordefiniertes Brühprogramm angepasst wird.
Ausführungsform 24:
   Portionskapselmaschine (1) nach Ausführungsform 23, wobei die Portionskapselmaschine (1) derart konfiguriert ist, dass die Flüssigkeitszuführvorrichtung in einem Sicherheitsbetrieb betrieben wird, in welchem der Brühkammer (19) Flüssigkeit vorzugsweise mit reduzierter Temperatur, reduziertem Druck, reduzierter Wassermenge und/oder geänderter Strömungscharakteristik zugeführt wird, wenn das bewegliche Brühkammerelement (6) in der Arbeitsstellung befindlich ist, wenn der Kapseldetektor (9) zuvor die Passage einer Portionskapsel (20) detektiert hat und wenn die Kapselerkennung noch nicht abgeschlossen ist oder keine bekannte Kennung detektiert wurde.
Ausführungsform 25:
   Portionskapselmaschine (1) nach einer der Ausführungsformen 23 oder 24, wobei die Portionskapselmaschine (1) ferner derart konfiguriert ist, dass entweder nach Verstreichen einer zweiten Zeitspanne seit Auslösen des zweiten Startsignals oder nach Ablauf des vordefinierten Brühprogramms das bewegliche Brühkammerelement (6) von der Arbeitsstellung zurück in die Ruhestellung und/oder die Ladestellung überführt wird.
Ausführungsform 26:
   Portionskapselmaschine (1) nach einer der Ausführungsformen 19 bis 25, wobei die Portionskapselmaschine (1) einen weiteren Kapseldetektor (14) aufweist, welcher vorzugsweise unterhalb des beweglichen Brühkammerelements (6) angeordnet ist und vorzugsweise mit einem Kapselzähler (8) verknüpft ist.
Ausführungsform 27:
   Portionskapselmaschine (1) nach einer der Ausführungsformen 19 bis 26, wobei der Kapseldetektor (9) und/oder der weitere Kapseldetektor (14) eine Lichtschranke umfassen.
Ausführungsform 28:
   Portionskapselmaschine (1) nach einer der Ausführungsformen 19 bis 27, wobei die Blockiervorrichtung (13) einen beweglichen Pin umfasst, welcher mittels eines Antriebs automatisch in den Kapselzuführschacht (21) hinein und aus dem Kapselzuführschacht (21) heraus linear verfahrbar oder schwenkbar ist.
Ausführungsform 29:
   Verfahren zum Betrieb einer Portionskapselmaschine (1) nach einer der Ausführungsformen 19 bis 28, wobei in einem ersten Verfahrensschritt die Blockiervorrichtung (13) von der Freigabestellung in die Blockierstellung überführt wird, wenn ein erstes Startsignal von dem Kapseldetektor (9) oder ein zweites Startsignal von der Betätigungsvorrichtung (10) ausgelöst wird, dadurch gekennzeichnet, dass in einem zweiten Verfahrensschritt nach Verstreichen einer ersten Zeitspanne (12) seit Auslösen des zweiten Startsignals das bewegliche Brühkammerelement (6) von der Ladestellung in die Arbeitsstellung verfahren wird, wobei in einem dritten Verfahrensschritt der Brühkammer (19) Flüssigkeit mittels der Flüssigkeitszuführvorrichtung zugeführt wird, wenn das bewegliche Brühkammerelement (6) in der Arbeitsstellung befindlich ist und der Kapseldetektor (9) zuvor die Passage einer Portionskapsel (20) detektiert hat.
Ausführungsform 30:
   Verfahren nach Ausführungsform 29, wobei im dritten Verfahrensschritt die Flüssigkeitszuführvorrichtung nach dem Schließen der Brühkammer (19) zunächst in einem Sicherheitsbetrieb betrieben wird, in welchem vorzugsweise der Brühkammer (19) Flüssigkeit mit reduzierter Temperatur, reduziertem Druck, reduzierter Wassermenge und/oder geänderter Strömungscharakteristik zugeführt wird.
Ausführungsform 31:
   Verfahren nach einer der Ausführungsformen 29 oder 30, wobei während des dritten Verfahrensschrittes eine auf der Portionskapsel (20) befindliche Kennung mittels eines Kapselerkennungsdetektors (22) ausgelesen und mittels einer Auswerteeinheit vorzugsweise mit vorgespeicherten Kennungen verglichen wird.
Ausführungsform 32:
   Verfahren nach Ausführungsform 31, wobei im dritten Verfahrensschritt die Flüssigkeitszuführvorrichtung vom Sicherheitsbetrieb in ein zur erkannten Portionskapsel (20) passendes vordefiniertes Brühprogramm wechselt, nur wenn die ausgelesene Kennung von der Auswerteeinheit erkannt und einem bestimmten Brühprogramm zugeordnet wird, wobei im Rahmen des vordefinierten Brühprogramms die Flüssigkeitszufuhr, insbesondere die Temperatur, der Druck, die Wassermenge und/oder die Strömungscharakteristik der zugeführten Flüssigkeit angepasst wird.
Ausführungsform 33:
   Verfahren nach einer der Ausführungsformen 29 bis 32, wobei der Sicherheitsbetrieb abgebrochen wird und das bewegliche Brühkammerelement (6) zurück in die Ruhestellung verfahren wird, sobald die Betätigungsvorrichtung (10) während des Sicherheitsbetriebs durch den Benutzer ausgelöst wird.
Ausführungsform 34:
   Verfahren nach einer der Ausführungsformen 29 bis 33, wobei in einem vierten Verfahrensschritt das bewegliche Brühkammerelement (6) von der Arbeitsstellung zurück in die Ruhestellung und/oder die Ladestellung verfahren wird, sobald eine zweite Zeitspanne seit Auslösen des zweiten Startsignals verstrichen ist oder das vordefinierte Brühprogramm endet.
Ausführungsform 35:
   Verfahren nach einer der Ausführungsformen 29 bis 34, wobei die Anzahl der in der Portionskapselmaschine (1) verwendeten Portionskapseln (20) von einem unterhalb des beweglichen Brühkammerelements (6) angeordneten weiteren Kapseldetektor (14) gezählt wird.
Ausführungsform 36:
   Verfahren nach einer der Ausführungsformen 29 bis 35, wobei im ersten Verfahrensschritt die Blockiervorrichtung (13) nach Verstreichen einer dritten Zeitspanne (11), insbesondere seit Auslösen des ersten und/oder zweiten Startsignals, von der Blockierstellung zurück in die Freigabestellung überführt wird.
Ausführungsform 37:
   Verfahren nach einer der Ausführungsformen 29 bis 36, wobei im dritten Verfahrensschritt, insbesondere nach dem Schließen der Brühkammer (19), zunächst eine auf der Portionskapsel (20) befindliche Kennung mittels eines Kapselerkennungsdetektors (22) ausgelesen und mittels einer Auswerteeinheit mit vorzugsweise vorgespeicherten Kennungen verglichen wird und wobei anschließend der Brühkammer (19) Flüssigkeit mittels der Flüssigkeitszuführvorrichtung gemäß einem vordefinierten Brühprogramm zugeführt wird, wenn die ausgelesene Kennung von der Auswerteeinheit erkannt und einem vordefinierten Brühprogramm zuordenbar ist, wobei im Rahmen des vordefinierten Brühprogramms die Flüssigkeitszufuhr insbesondere die Temperatur, der Druck, die Wassermenge und/oder die Strömungscharakteristik der zugeführten

### Bezugszeichenliste

- 1: Portionskapselmaschine
- 2: Pumpe
- 3: Thermoelement
- 4: Einwurfrichtung
- 5: Unbewegliches Brühkammerelement
- 6: Bewegliches Brühkammerelement
- 7: Motor
- 8: Kapselzähler
- 9: Kapseldetektor
- 10: Betätigungsvorrichtung
- 11: Dritte Zeitspanne
- 12: Erste Zeitspanne
- 13: Blockiervorrichtung
- 14: Weiterer Kapseldetektor
- 15: Erste Perforationsmittel
- 16: Kapselauflage
- 17: Oberseite des beweglichen Brühkammerelements
- 18: Zweites Perforationsmittel
- 19: Brühkammer
- 20: Portionskapsel
- 21: Kapselzuführschacht
- 22: Kapselerkennungsdetektor

## Patentansprüche

1. Portionskapselmaschine (1) zur Herstellung eines Getränks aus einer Portionskapsel (20), wobei die Portionskapselmaschine (1) ein bewegliches Brühkammerelement (6) und ein unbewegliches Brühkammerelement (5) aufweist, wobei das bewegliche Brühkammerelement (6) mittels eines Motors (7) zwischen einer Ladestellung, in welcher das bewegliche Brühkammerelement (6) und das unbewegliche Brühkammerelement (5) zum Einbringen einer Portionskapsel (20) voneinander beabstandet sind, und einer Arbeitsstellung, in welcher das bewegliche Brühkammerelement (6) und das unbewegliche Brühkammerelement (5) zur Bildung einer im Wesentlichen geschlossenen Brühkammer (19) einander angenähert sind, bewegbar ist, wobei die Portionskapselmaschine (1) ferner einen Kapselzuführschacht (21), durch welchen Portionskapseln (20) dem in der Ladestellung befindlichen beweglichen Brühkammerelement (6) zuführbar sind, aufweist, wobei innerhalb des Kapselzuführschachts (21) eine Blockiervorrichtung (13) angeordnet ist, welche zwischen einer Blockierstellung, in welcher Portionskapseln (20) am Passieren der Blockiervorrichtung (13) gehindert werden, und einer Freigabestellung, in welcher die Blockiervorrichtung (13) für Portionskapseln (20) passierbar ist, mittels eines Antriebs überführbar ist, wobei im Bereich des Kapselzuführschachts (21) oder oberhalb des Kapselzuführschachts (21) ferner ein Kapseldetektor (9) angeordnet ist, welcher ein Passieren einer Portionskapsel (20) detektiert, und wobei die Portionskapselmaschine (1) eine Betätigungsvorrichtung (10) zum Starten des Getränkeherstellungsverfahrens durch einen Benutzer aufweist, wobei die Portionskapselmaschine (1) derart konfiguriert ist, dass in Abhängigkeit eines durch Betätigen der Betätigungsvorrichtung (10) ausgelösten Startsignals die Blockiervorrichtung (13) von der Blockierstellung in die Freigabestellung verfahren wird, **dadurch gekennzeichnet, dass** die Portionskapselmaschine (1) ferner derart konfiguriert ist, dass nach Verstreichen einer ersten Zeitspanne (12) seit Auslösen des Startsignals das bewegliche Brühkammerelement (6) von der Ladestellung in die Arbeitsstellung überführt wird und wobei die Portionskapselmaschine (1) derart konfiguriert ist, dass eine Flüssigkeitszuführvorrichtung zum Zuführen von Flüssigkeit in die Brühkammer (19) in Betrieb genommen wird, wenn das bewegliche Brühkammerelement (6) in der Arbeitsstellung befindlich ist und der Kapseldetektor (9) zuvor eine Portionskapsel (20) detektiert hat.

2. Portionskapselmaschine (1) nach Anspruch 1, wobei das bewegliche Brühkammerelement einen Kapselerkennungsdetektor (22) aufweist, welcher zum Auslesen einer auf der Portionskapsel (20) befindlichen Kennung vorgesehen ist.

3. Portionskapselmaschine (1) nach Anspruch 2, wobei die Portionskapselmaschine (1) eine Auswerteeinheit zum Vergleichen der detektierten Kennung mit bevorzugt vorgespeicherten Kennungen aufweist und wobei die Flüssigkeitszufuhrvorrichtung von der Auswerteeinheit derart gesteuert wird, dass die Flüssigkeitszufuhr insbesondere die Temperatur, der Druck, Wassermenge und/oder Strömungscharakteristik der zugeführten Flüssigkeit, bei Detektion einer bekannten Kennung an ein vordefiniertes Brühprogramm angepasst wird.

4. Portionskapselmaschine (1) nach Anspruch 3, wobei die Portionskapselmaschine (1) derart konfiguriert ist, dass die Flüssigkeitszuführvorrichtung in einem Sicherheitsbetrieb betrieben wird, in welchem der Brühkammer (19) Flüssigkeit vorzugsweise mit reduzierter Temperatur, reduziertem Druck, reduzierter Wassermenge und/oder geänderter Strömungscharakteristik zugeführt wird, wenn das bewegliche Brühkammerelement (6) in der Arbeitsstellung befindlich ist, wenn der Kapseldetektor (9) zuvor die Passage einer Portionskapsel (20) detektiert hat und wenn die Kapselerkennung noch nicht abgeschlossen ist oder keine bekannte Kennung detektiert wurde.

5. Verfahren zum Betrieb einer Portionskapselmaschine (1) nach einem der vorhergehenden Ansprüche, wobei in einem ersten Verfahrensschritt die Blockiervorrichtung (13) von der Blockierstellung in die Freigabestellung überführt wird, wenn ein Startsignal von der Betätigungsvorrichtung (10) ausgelöst wird, **dadurch gekennzeichnet, dass** in einem zweiten Verfahrensschritt nach Verstreichen einer ersten Zeitspanne (12) seit Auslösen des Startsignals das bewegliche Brühkammerelement (6) von der Ladestellung in die Arbeitsstellung verfahren wird, wobei in einem dritten Verfahrensschritt der Brühkammer (19) Flüssigkeit mittels der Flüssigkeitszuführvorrichtung zugeführt wird, wenn das bewegliche Brühkammerelement (6) in der Arbeitsstellung befindlich ist und der Kapseldetektor (9) zuvor die Passage einer Portionskapsel (20) detektiert hat.

6. Verfahren nach Anspruch 5, wobei im dritten Verfahrensschritt die Flüssigkeitszuführvorrichtung nach dem Schließen der Brühkammer (19) zunächst in einem Sicherheitsbetrieb betrieben wird, in welchem vorzugsweise der Brühkammer (19) Flüssigkeit mit reduzierter Temperatur, reduziertem Druck, reduzierter Wassermenge und/oder geänderter Strömungscharakteristik zugeführt wird.

7. Verfahren nach einem der Ansprüche 5 oder 6, wobei während des dritten Verfahrensschrittes eine auf der Portionskapsel (20) befindliche Kennung mittels eines Kapselerkennungsdetektors (22) ausgelesen und mittels einer Auswerteeinheit vorzugsweise mit vorgespeicherten Kennungen verglichen wird.

8. Verfahren nach Anspruch 7, wobei im dritten Verfahrensschritt die Flüssigkeitszuführvorrichtung vom Sicherheitsbetrieb in ein zur erkannten Portionskapsel (20) passendes vordefiniertes Brühprogramm wechselt, nur wenn die ausgelesene Kennung von der Auswerteeinheit erkannt und einem bestimmten Brühprogramm zugeordnet wird, wobei im Rahmen des vordefinierten Brühprogramms die Flüssigkeitszufuhr insbesondere die Temperatur, der Druck, die Wassermenge und/oder die Strömungscharakteristik der zugeführten Flüssigkeit angepasst wird.

9. Verfahren nach einem der Ansprüche 5 bis 8, wobei der Sicherheitsbetrieb abgebrochen wird und das bewegliche Brühkammerelement (6) zurück in die Ladestellung verfahren wird, sobald die Betätigungsvorrichtung (10) während des Sicherheitsbetriebs durch den Benutzer ausgelöst wird.

10. Portionskapselmaschine (1) zur Herstellung eines Getränks aus einer Portionskapsel (20), wobei die Portionskapselmaschine (1) ein bewegliches Brühkammerelement (6) und ein unbewegliches Brühkammerelement (5) aufweist, wobei das bewegliche Brühkammerelement (6) mittels eines Motors (7) zwischen einer Ladestellung, in welcher das bewegliche Brühkammerelement (6) und das unbewegliche Brühkammerelement (5) zum Einbringen einer Portionskapsel (20) voneinander beabstandet sind, und einer Arbeitsstellung, in welcher das bewegliche Brühkammerelement (6) und das unbewegliche Brühkammerelement (5) zur Bildung einer im Wesentlichen geschlossenen Brühkammer (19) einander angenähert sind, bewegbar ist, wobei die Portionskapselmaschine (1) ferner einen Kapselzuführschacht (21), durch welchen Portionskapseln (20) dem in der Ladestellung befindlichen beweglichen Brühkammerelement (6) zuführbar sind, aufweist, wobei innerhalb des Kapselzuführschachts (21) eine Blockiervorrichtung (13) angeordnet ist, welche zwischen einer Blockierstellung, in welcher Portionskapseln (20) am Passieren der Blockiervorrichtung (13) gehindert werden, und einer Freigabestellung, in welcher die Blockiervorrichtung (13) für Portionskapseln (20) passierbar ist, mittels eines Antriebs überführbar ist, wobei im Bereich des Kapselzuführschachts (21) oder oberhalb des Kapselzuführschachts (21) ferner ein Kapseldetektor (9) angeordnet ist, welcher ein Passieren einer Portionskapsel (20) detektiert, und wobei die Portionskapselmaschine (1) eine Betätigungsvorrichtung (10) zum Starten des Getränkeherstellungsverfahrens durch einen Benutzer aufweist, wobei die Portionskapselmaschine (1) derart konfiguriert ist, dass in Abhängigkeit
- eines durch Detektieren einer Portionskapsel (20) durch den Kapseldetektor (9) ausgelösten ersten Startsignals oder
- eines durch Betätigen der Betätigungsvorrichtung (10) ausgelösten zweiten Startsignals
die Blockiervorrichtung (13) von der Freigabestellung in die Blockierstellung verfahren wird, wobei die Portionskapselmaschine (1) ferner derart konfiguriert ist, dass in Abhängigkeit des durch Betätigen der Betätigungsvorrichtung (10) ausgelösten zweiten Startsignals das bewegliche Brühkammerelement (6) in die Ladestellung überführt wird, **dadurch gekennzeichnet, dass** die Portionskapselmaschine (1) ferner derart konfiguriert ist, dass nach Verstreichen einer ersten Zeitspanne (12) seit Auslösen des zweiten Startsignals das bewegliche Brühkammerelement (6) von der Ladestellung in die Arbeitsstellung überführt wird.

11. Portionskapselmaschine (1) nach Anspruch 10, wobei die Portionskapselmaschine (1) derart konfiguriert ist, dass eine Flüssigkeitszuführvorrichtung zum Zuführen von Flüssigkeit in die Brühkammer (19) in Betrieb genommen wird, wenn das bewegliche Brühkammerelement (6) in der Arbeitsstellung befindlich ist und der Kapseldetektor (9) zuvor eine Portionskapsel (20) detektiert hat.

12. Portionskapselmaschine (1) nach einem der Ansprüche 10 oder 11, wobei das bewegliche Brühkammerelement (6) in eine Ruhestellung bewegbar ist, wobei die Ruhestellung vorzugsweise zwischen der Arbeitsstellung und der Ladestellung angeordnet ist, wobei die Portionskapselmaschine (1) insbesondere derart konfiguriert ist, dass das bewegliche Brühkammerelement (6) vor Betätigen der Betätigungsvorrichtung (10) in der Ruhestellung befindlich ist und/oder unmittelbar nach Betätigen der Betätigungsvorrichtung (10) von der Ruhestellung in die Ladestellung überführt wird.

13. Verfahren zum Betrieb einer Portionskapselmaschine (1) nach einem der Ansprüche 10 bis 12, wobei in einem ersten Verfahrensschritt die Blockiervorrichtung (13) von der Freigabestellung in die Blockierstellung überführt wird, wenn ein erstes Startsignal von dem Kapseldetektor (9) oder ein zweites Startsignal von der Betätigungsvorrichtung (10) ausgelöst wird, **dadurch gekennzeichnet, dass** in einem zweiten Verfahrensschritt nach Verstreichen einer ersten Zeitspanne (12) seit Auslösen des zweiten Startsignals das bewegliche Brühkammerelement (6) von der Ladestellung in die Arbeitsstellung verfahren wird, wobei in einem dritten Verfahrensschritt der Brühkammer (19) Flüssigkeit mittels der Flüssigkeitszuführvorrichtung zugeführt wird, wenn das bewegliche Brühkammerelement (6) in der Arbeitsstellung befindlich ist und der Kapseldetektor (9) zuvor die Passage einer Portionskapsel (20) detektiert hat.

14. Verfahren nach Anspruch 13, wobei im dritten Verfahrensschritt die Flüssigkeitszuführvorrichtung nach dem Schließen der Brühkammer (19) zunächst in einem Sicherheitsbetrieb betrieben wird, in welchem vorzugsweise der Brühkammer (19) Flüssigkeit mit reduzierter Temperatur, reduziertem Druck, reduzierter Wassermenge und/oder geänderter Strömungscharakteristik zugeführt wird.

15. Verfahren nach einem der Ansprüche 13 oder 14, wobei während des dritten Verfahrensschrittes eine auf der Portionskapsel (20) befindliche Kennung mittels eines Kapselerkennungsdetektors (22) ausgelesen und mittels einer Auswerteeinheit vorzugsweise mit vorgespeicherten Kennungen verglichen wird.

16. Verfahren nach Anspruch 15, wobei im dritten Verfahrensschritt die Flüssigkeitszuführvorrichtung vom Sicherheitsbetrieb in ein zur erkannten Portionskapsel (20) passendes vordefiniertes Brühprogramm wechselt, nur wenn die ausgelesene Kennung von der Auswerteeinheit erkannt und einem bestimmten Brühprogramm zugeordnet wird, wobei im Rahmen des vordefinierten Brühprogramms die Flüssigkeitszufuhr, insbesondere die Temperatur, der Druck, die Wassermenge und/oder die Strömungscharakteristik der zugeführten Flüssigkeit angepasst wird.

17. Verfahren nach einem der Ansprüche 14 bis 16, wobei der Sicherheitsbetrieb abgebrochen wird und das bewegliche Brühkammerelement (6) zurück in die Ruhestellung verfahren wird, sobald die Betätigungsvorrichtung (10) während des Sicherheitsbetriebs durch den Benutzer ausgelöst wird.

## Claims

1. Single-serve-capsule machine (1) for producing a beverage from a single-serve capsule (20), wherein the single-serve-capsule machine (1) has a movable brewing chamber element (6) and an immovable brewing chamber element (5), wherein the movable brewing chamber element (6) by means of a motor (7) is movable between a loading position, in which the movable brewing chamber element (6) and the immovable brewing chamber element (5) for introducing a single-serve capsule (20) are mutually spaced apart, and an operating position in which the movable brewing chamber element (6) and the immovable brewing chamber element (5) for forming a substantially closed brewing chamber (19) are converged, wherein the single-serve-capsule machine (1) furthermore has a capsule supply duct (21) through which single-serve capsules (20) are capable of being supplied to the movable brewing chamber element (6) located in the loading position, wherein a blocking device (13), which by means of a drive is transferable between a blocking position, in which single-serve capsules (20) are prevented from passing the blocking device (13), and a releasing position, in which the blocking device (13) is capable of being passed by single-serve capsules (20), is disposed within the capsule supply duct (21), wherein a capsule detector (9) is furthermore disposed in the region of the capsule supply duct (21) or above the capsule supply duct (21), said capsule detector (9) detects passage of a single-serve capsule (20), and wherein the single-serve-capsule machine (1) has an activating device (10) for starting the beverage production method by a user, wherein the single-serve-capsule machine (1) is configured in such a manner that the blocking device (13) is relocated from the blocking position to the releasing position depending on a start signal that is triggered by activating the activating device (10), **characterized in that** the single-serve-capsule machine (1) is furthermore configured in such a manner that the movable brewing chamber element (6), after a first duration (12) since triggering the start signal has lapsed, is transferred from the loading position to the operating position, and wherein the single-serve-capsule machine (1) is configured in such a manner that a liquid supply device for supplying liquid to the brewing chamber (19) is set in operation when the movable brewing chamber element (6) is located in the operating position and the capsule detector (9) prior thereto has detected a single-serve capsule (20).

2. Single-serve-capsule machine (1) according to Claim 1, wherein the movable brewing chamber element has a capsule identification detector (22) which is provided for reading an identifier that is located on the single-serve capsule (20).

3. Single-serve-capsule machine (1) according to Claim 2, wherein the single-serve-capsule machine (1) has an evaluation unit for comparing the detected identifier with preferably pre-stored identifiers, and wherein the liquid supply device is controlled by the evaluation unit in such a manner that the supply of liquid, in particular the temperature, the pressure, quantity of water, and/or flow characteristic of the supplied liquid, upon the detection of a known identifier is/are adapted to a predefined brewing programme.

4. Single-serve-capsule machine (1) according to Claim 3, wherein the single-serve-capsule machine (1) is configured in such a manner that the liquid supply device is operated in a secure operation in which the brewing chamber (19) is preferably supplied liquid at reduced temperature, reduced pressure, reduced quantity of water, and/or modified flow characteristic when the movable brewing chamber element (6) is located in the operating position, when the capsule detector (9) prior thereto has detected the passage of a single-serve capsule (20), and when the capsule identification has not yet been completed or no known identifier has been detected.

5. Method for operating a single-serve-capsule machine (1) according to one of the preceding claims, wherein in a first method step the blocking device (13) is transferred from the blocking position to the releasing position when a start signal is triggered by the activating device (10), **characterized in that** in a second method step, after a first duration (12) since triggering the start signal has lapsed, the movable brewing chamber element (6) is relocated from the loading position to the operating position, wherein in a third method step the brewing chamber (19) is supplied liquid by means of the liquid supply device when the movable brewing chamber element (6) is located in the operating position and the capsule detector (9) prior thereto has detected the passage of a single-serve capsule (20).

6. Method according to Claim 5, wherein in the third method step the liquid supply device after the closing of the brewing chamber (19) is first operated in a secure operation in which the brewing chamber (19) is preferably supplied liquid at reduced temperature, reduced pressure, reduced quantity of water, and/or modified flow characteristic.

7. Method according to one of Claims 5 or 6, wherein during the third method step an identifier that is located on the single-serve capsule (20) is read by means of a capsule identification detector (22) and by means of an evaluation unit is preferably compared with pre-stored identifiers.

8. Method according to Claim 7, wherein in the third method step the liquid supply device changes from the secure operation to a predefined brewing programme that matches the identified single-serve capsule (20) only when the read identifier is identified by the evaluation unit and is assigned to a specific brewing programme, wherein the supply of liquid, in particular the temperature, the pressure, the quantity of water, and/or the flow characteristic of the supplied liquid is adapted within the context of the predefined brewing programme.

9. Method according to one of Claims 5 to 8, wherein the secure operation is aborted and the movable brewing chamber element (6) is returned to the loading position as soon as the activating device (10) is triggered by the user during the secure operation.

10. Single-serve-capsule machine (1) for producing a beverage from a single-serve capsule (20), wherein the single-serve-capsule machine (1) has a movable brewing chamber element (6) and an immovable brewing chamber element (5), wherein the movable brewing chamber element (6) by means of a motor (7) is movable between a loading position, in which the movable brewing chamber element (6) and the immovable brewing chamber element (5) for introducing a single-serve capsule (20) are mutually spaced apart, and an operating position in which the movable brewing chamber element (6) and the immovable brewing chamber element (5) for forming a substantially closed brewing chamber (19) are converged, wherein the single-serve-capsule machine (1) furthermore has a capsule supply duct (21) through which single-serve capsules (20) are capable of being supplied to the movable brewing chamber element (6) located in the loading position, wherein a blocking device (13), which by means of a drive is transferable between a blocking position, in which single-serve capsules (20) are prevented from passing the blocking device (13), and a releasing position, in which the blocking device (13) is capable of being passed by single-serve capsules (20), is disposed within the capsule supply duct (21), wherein a capsule detector (9) is furthermore disposed in the region of the capsule supply duct (21) or above the capsule supply duct (21), said capsule detector (9) detects passage of a single-serve capsule (20), and wherein the single-serve-capsule machine (1) has an activating device (10) for starting the beverage production method by a user, wherein the single-serve-capsule machine (1) is configured in such a manner that the blocking device (13) is relocated from the blocking position to the releasing position depending on
- a first start signal that is triggered by the capsule detector (9) having detected a single-serve capsule (20), or
- a second start signal that is triggered by activating the activating device (10),
wherein the single-serve-capsule machine (1) is furthermore configured in such a manner that the movable brewing chamber element (6), depending on the second start signal that is triggered by activating the activating device (10), is transferred to the loading position, **characterized in that** the single-serve-capsule machine (1) is furthermore configured in such a manner that the movable brewing chamber element (6), after a first duration (12) since triggering the second start signal has lapsed, is transferred from the loading position to the operating position.

11. Single-serve-capsule machine (1) according to Claim 10, wherein the single-serve-capsule machine (1) is configured in such a manner that a liquid supply device for supplying liquid to the brewing chamber (19) is set in operation when the movable brewing chamber element (6) is located in the operating position and the capsule detector (9) prior thereto has detected a single-serve capsule (20).

12. Single-serve-capsule machine (1) according to one of Claims 10 or 11, wherein the movable brewing chamber element (6) is movable to a resting position, wherein the resting position is preferably disposed between the operating position and the loading position, wherein the single-serve-capsule machine (1) is in particular configured in such a manner that the movable brewing chamber element (6) prior to the activation of the activating device (10) is located in the resting position, and/or is transferred from the resting position to the loading position immediately after the activation of the activating device (10).

13. Method for operating a single-serve-capsule machine (1) according to one of Claims 10 to 12, wherein in a first method step the blocking device (13) is transferred from the releasing position to the blocking position when a first start signal is triggered by the capsule detector (9) or a second start signal is triggered by the activating device (10), **characterized in that** in a second method step, after a first duration (12) since triggering the second start signal has lapsed, the movable brewing chamber element (6) is relocated from the loading position to the operating position, wherein in a third method step the brewing chamber (19) is supplied liquid by means of the liquid supply device when the movable brewing chamber element (6) is located in the operating position and the capsule detector (9) prior thereto has detected the passage of a single-serve capsule (20).

14. Method according to Claim 13, wherein in the third method step the liquid supply device after the closing of the brewing chamber (19) is first operated in a secure operation in which the brewing chamber (19) is preferably supplied liquid at reduced temperature, reduced pressure, reduced quantity of water, and/or modified flow characteristic.

15. Method according to one of Claims 13 or 14, wherein during the third method step an identifier that is located on the single-serve capsule (20) is read by means of a capsule identification detector (22) and by means of an evaluation unit is preferably compared with pre-stored identifiers.

16. Method according to Claim 15, wherein in the third method step the liquid supply device changes from the secure operation to a predefined brewing programme that matches the identified single-serve capsule (20) only when the read identifier is identified by the evaluation unit and is assigned to a specific brewing programme, wherein the supply of liquid, in particular the temperature, the pressure, the quantity of water, and/or the flow characteristic of the supplied liquid is adapted within the context of the predefined brewing programme.

17. Method according to one of Claims 14 to 16, wherein the secure operation is aborted and the movable brewing chamber element (6) is returned to the resting position as soon as the activating device (10) is triggered by the user during the secure operation.

## Revendications

1. Machine à capsules-portions (1) pour la préparation d'une boisson à partir d'une capsule-portion (20), la machine à capsules-portions (1) présentant un élément de chambre d'infusion mobile (6) et un élément de chambre d'infusion non mobile (5), l'élément de chambre d'infusion mobile (6) pouvant être déplacé au moyen d'un moteur (7) entre une position de chargement dans laquelle l'élément de chambre d'infusion mobile (6) et l'élément de chambre d'infusion non mobile (5) sont espacés l'un de l'autre pour introduire une capsule-portion (20), et une position de travail dans laquelle l'élément de chambre d'infusion mobile (6) et l'élément de chambre d'infusion non mobile (5) sont rapprochés l'un de l'autre pour former une chambre d'infusion (19) essentiellement fermée, la machine à capsules-portions (1) présentant en outre un puits d'alimentation de capsules (21) par lequel des capsules-portions (20) peuvent être acheminées à l'élément de chambre d'infusion mobile (6) se trouvant dans la position de chargement, un dispositif de blocage (13) étant disposé à l'intérieur du puits d'alimentation de capsules (21), lequel peut être transféré au moyen d'un entraînement entre une position de blocage dans laquelle des capsules-portions (20) ne peuvent pas passer le dispositif de blocage (13), et une position de libération dans laquelle les capsules-portions (20) peuvent passer le dispositif de blocage (13), un détecteur de capsules (9) étant en outre disposé dans la région du puits d'alimentation de capsules (21) ou au-dessus du puits d'alimentation de capsules (21), lequel détecte un passage d'une capsule-portion (20), et la machine à capsules-portions (1) présentant un dispositif d'actionnement (10) pour démarrer le procédé de préparation de boissons par un utilisateur, la machine à capsules-portions (1) étant configurée de telle sorte qu'en fonction d'un signal de départ déclenché par l'actionnement du dispositif d'actionnement (10), le dispositif de blocage (13) soit déplacé de la position de blocage dans la position de libération, **caractérisée en ce que** la machine à capsules-portions (1) est en outre configurée de telle sorte qu'après l'écoulement d'une première période de temps (12) depuis le déclenchement du signal de départ, l'élément de chambre d'infusion mobile (6) soit transféré de la position de chargement dans la position de travail et la machine à capsules-portions (1) étant configurée de telle sorte qu'un dispositif d'alimentation en liquide pour l'alimentation en liquide de la chambre d'infusion (19) soit mis en fonctionnement lorsque l'élément de chambre d'infusion mobile (6) se trouve dans la position de travail et que le détecteur de capsules (9) a préalablement détecté une capsule-portion (20).

2. Machine à capsules-portions (1) selon la revendication 1, dans laquelle l'élément de chambre d'infusion mobile présente un détecteur de caractéristique de capsule (22) qui est prévu pour lire une caractéristique se trouvant sur la capsule-portion (20).

3. Machine à capsules-portions (1) selon la revendication 2, dans laquelle la machine à capsules-portion (1) présente une unité d'analyse pour comparer la caractéristique détectée avec des caractéristiques de préférence préalablement mémorisées et dans laquelle le dispositif d'alimentation en liquide est commandé par l'unité d'analyse de telle sorte que l'alimentation en liquide, en particulier la température, la pression, la quantité d'eau et/ou la caractéristique d'écoulement du liquide acheminé soient adaptées à un programme d'infusion prédéfini lors de la détection d'une caractéristique connue.

4. Machine à capsules-portions (1) selon la revendication 3, dans laquelle la machine à capsules-portions (1) est configurée de telle sorte que le dispositif d'alimentation en liquide soit entraîné dans un mode de sécurité dans lequel la chambre d'infusion (19) est alimentée en liquide ayant de préférence une température réduite, une pression réduite, une quantité d'eau réduite et/ou une caractéristique d'écoulement modifiée lorsque l'élément de chambre d'infusion mobile (6) se trouve dans la position de travail, que le détecteur de capsules (9) a préalablement détecté le passage d'une capsule-portion (20) et que la caractéristique de capsules n'a pas encore été établie ou qu'aucune caractéristique connue n'a été détectée.

5. Procédé pour faire fonctionner une machine à capsules-portions (1) selon l'une quelconque des revendications précédentes, dans lequel, dans une première étape de procédé, le dispositif de blocage (13) est transféré de la position de blocage dans la position de libération lorsqu'un signal de départ est déclenché par le dispositif d'actionnement (10), **caractérisé en ce que** dans une deuxième étape de procédé après l'écoulement d'une première période de temps (12) depuis le déclenchement du signal de départ, l'élément de chambre d'infusion mobile (6) est déplacé de la position de chargement dans la position de travail, dans une troisième étape de procédé, du liquide étant acheminé à la chambre d'infusion (19) au moyen du dispositif d'alimentation en liquide lorsque l'élément de chambre d'infusion mobile (6) se trouve dans la position de travail et que le détecteur de capsules (9) a préalablement détecté le passage d'une capsule-portion (20).

6. Procédé selon la revendication 5, dans lequel, dans la troisième étape de procédé, le dispositif d'alimentation en liquide, après la fermeture de la chambre d'infusion (19), est d'abord entraîné dans un mode de sécurité dans lequel de préférence la chambre d'infusion (19) est alimentée en liquide ayant une température réduite, une pression réduite, une quantité d'eau réduite et/ou une caractéristique d'écoulement modifiée.

7. Procédé selon l'une quelconque des revendications 5 ou 6, dans lequel pendant la troisième étape de procédé, une caractéristique se trouvant sur la capsule-portion (20) est lue au moyen d'un détecteur de caractéristique de capsule (22) et est comparée au moyen d'une unité d'analyse de préférence avec des caractéristiques préalablement mémorisées.

8. Procédé selon la revendication 7, dans lequel, dans la troisième étape de procédé, le dispositif d'alimentation en liquide passe du mode de sécurité à un programme d'infusion prédéfini adapté à la capsule-portion reconnue (20) seulement lorsque la caractéristique lue est reconnue par l'unité d'analyse et est associée à un programme d'infusion déterminé, dans le cadre du programme d'infusion prédéfini, l'alimentation en liquide, notamment la température, la pression, la quantité d'eau et/ou la caractéristique d'écoulement du liquide acheminé étant adaptées.

9. Procédé selon l'une quelconque des revendications 5 à 8, dans lequel le mode de sécurité est interrompu et l'élément de chambre d'infusion mobile (6) est ramené dans la position de chargement dès que le dispositif d'actionnement (10) est déclenché par l'utilisateur pendant le mode de sécurité.

10. Machine à capsules-portions (1) pour la préparation d'une boisson à partir d'une capsule-portion (20), la machine à capsules-portions (1) présentant un élément de chambre d'infusion mobile (6) et un élément de chambre d'infusion non mobile (5), l'élément de chambre d'infusion mobile (6) pouvant être déplacé au moyen d'un moteur (7) entre une position de chargement dans laquelle l'élément de chambre d'infusion mobile (6) et l'élément de chambre d'infusion non mobile (5) sont espacés l'un de l'autre pour introduire une capsule-portion (20), et une position de travail dans laquelle l'élément de chambre d'infusion mobile (6) et l'élément de chambre d'infusion non mobile (5) sont rapprochés l'un de l'autre pour former une chambre d'infusion (19) essentiellement fermée, la machine à capsules-portions (1) présentant en outre un puits d'alimentation de capsules (21) par lequel des capsules-portions (20) peuvent être acheminées à l'élément de chambre d'infusion mobile (6) se trouvant dans la position de chargement, un dispositif de blocage (13) étant disposé à l'intérieur du puits d'alimentation de capsules (21), lequel peut être transféré au moyen d'un entraînement entre une position de blocage dans laquelle des capsules-portions (20) ne peuvent pas passer le dispositif de blocage (13), et une position de libération dans laquelle les capsules-portions (20) peuvent passer le dispositif de blocage (13), un détecteur de capsules (9) étant en outre disposé dans la région du puits d'alimentation de capsules (21) ou au-dessus du puits d'alimentation de capsules (21), lequel détecte un passage d'une capsule-portion (20), et la machine à capsules-portions (1) présentant un dispositif d'actionnement (10) pour démarrer le procédé de préparation de boissons par un utilisateur, la machine à capsules-portions (1) étant configurée de telle sorte qu'en fonction
- d'un premier signal de départ déclenché par le détecteur de capsules (9) par détection d'une capsule-portion (20) ou
- d'un deuxième signal de départ déclenché par l'actionnement du dispositif d'actionnement (10),
le dispositif de blocage (13) soit déplacé de la position de libération dans la position de blocage, la machine à capsules-portions (1) étant en outre configurée de telle sorte qu'en fonction du deuxième signal de départ déclenché par l'actionnement du dispositif d'actionnement (10), l'élément de chambre d'infusion mobile (6) soit transféré dans la position de chargement, **caractérisée en ce que** la machine à capsules-portions (1) est en outre configurée de telle sorte qu'après l'écoulement d'une première période de temps (12) depuis le déclenchement du deuxième signal de départ, l'élément de chambre d'infusion mobile (6) soit transféré de la position de chargement dans la position de travail.

11. Machine à capsules-portions (1) selon la revendication 10, dans laquelle la machine à capsules-portion (1) est configurée de telle sorte qu'un dispositif d'alimentation en liquide pour l'alimentation en liquide de la chambre d'infusion (19) est mis en fonctionnement lorsque l'élément de chambre d'infusion mobile (6) se trouve dans la position de travail et que le détecteur de capsules (9) a préalablement détecté une capsule-portion (20).

12. Machine à capsules-portions (1) selon l'une quelconque des revendications 10 ou 11, dans laquelle l'élément de chambre d'infusion mobile (6) peut être déplacé dans une position de repos, la position de repos étant de préférence disposée entre la position de travail et la position de chargement, la machine à capsules-portions (1) étant configurée notamment de telle sorte que l'élément de chambre d'infusion mobile (6) se trouve dans la position de repos avant l'actionnement du dispositif d'actionnement (10) et/ou soit transféré directement après l'actionnement du dispositif d'actionnement (10) de la position de repos dans la position de chargement.

13. Procédé pour faire fonctionner une machine à capsules-portions (1) selon l'une quelconque des revendications 10 à 12, dans lequel, dans une première étape de procédé, le dispositif de blocage (13) est transféré de la position de libération dans la position de blocage lorsqu'un premier signal de départ est déclenché par le détecteur de capsules (9) ou qu'un deuxième signal de départ est déclenché par le dispositif d'actionnement (10), **caractérisé en ce que** dans une deuxième étape de procédé après l'écoulement d'une première période de temps (12) depuis le déclenchement du deuxième signal de départ, l'élément de chambre d'infusion mobile (6) est déplacé de la position de chargement dans la position de travail, dans une troisième étape de procédé, du liquide étant acheminé à la chambre d'infusion (19) au moyen du dispositif d'alimentation en liquide, lorsque l'élément de chambre d'infusion mobile (6) se trouve dans la position de travail et que le détecteur de capsules (9) a préalablement détecté le passage d'une capsule-portion (20).

14. Procédé selon la revendication 13, dans lequel, dans la troisième étape de procédé, après la fermeture de la chambre d'infusion (19), le dispositif d'alimentation en liquide est d'abord entraîné dans un mode de sécurité dans lequel de préférence la chambre d'infusion (19) est alimentée en liquide avec une température réduite, une pression réduite, une quantité d'eau réduite et/ou une caractéristique d'écoulement modifiée.

15. Procédé selon l'une quelconque des revendications 13 ou 14, dans lequel, pendant la troisième étape de procédé, une caractéristique se trouvant sur la capsule-portion (20) est lue au moyen d'un détecteur de caractéristique de capsule (22) et est comparée au moyen d'une unité d'analyse de préférence avec des caractéristiques préalablement mémorisées.

16. Procédé selon la revendication 15, dans lequel, dans la troisième étape de procédé, le dispositif d'alimentation en liquide passe du mode de sécurité à un programme d'infusion prédéfini adapté à la capsule-portion reconnue (20) seulement lorsque la caractéristique lue est reconnue par l'unité d'analyse et est associée à un programme d'infusion déterminé, dans le cadre du programme d'infusion prédéfini, l'alimentation en liquide, notamment la température, la pression, la quantité d'eau et/ou la caractéristique d'écoulement du liquide acheminé étant adaptées.

17. Procédé selon l'une quelconque des revendications 14 à 16, dans lequel le mode de sécurité est interrompu et l'élément de chambre d'infusion mobile (6) est ramené dans la position de repos dès que le dispositif d'actionnement (10) est déclenché par l'utilisateur pendant le mode de sécurité.
